(19) Europäisches Patentamt / European Patent Office / Office européen des brevets

(11) **EP 1 821 240 A2**

(12) # EUROPEAN PATENT APPLICATION

(43) Date of publication:
**22.08.2007 Bulletin 2007/34**

(51) Int Cl.:
***G06K 9/32*** *(2006.01)*

(21) Application number: **07102154.7**

(22) Date of filing: **12.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **18.02.2006 KR 20060015954**

(71) Applicant: **Samsung Electronics Co., Ltd.**
**Suwon-si, Gyeonggi-Do (KR)**

(72) Inventor: **Woo, Sang-Wook**
c/o Samsung Electronics Co., Ltd.
**Suwon-si, Gyeonggi-do (KR)**

(74) Representative: **Zimmer, Franz-Josef**
**Grünecker, Kinkeldey,**
**Stockmair & Schwanhäusser**
**Anwaltssozietät**
**Maximilianstrasse 58**
**80538 München (DE)**

(54) **Device and method for detecting telephone number information from digital multimedia broadcasting in digital multimedia broadcasting receiving terminal**

(57)     Disclosed is a device and method for detecting telephone number information from DMB in a DMB receiving terminal. If DMB data is received, the present invention scans I-frame data from among the received DMB data, and detects an ROI from the scanned data. If the ROI is detected, the present invention binarizes the detected ROI, and extracts a numeral region from the correspondent ROI while passing through processes of removing a non-text region from the binarized ROI and partitioning a character string region and characters of the correspondent ROI. Blobs extracted from the extracted numeral region are recognized as numerals, combines telephone numbers using the recognized numerals, stores and outputs them. A user can obtain a telephone number broadcasted in the DMB without changing a general DMB data transmission/reception process, and receive services provided according thereto.

FIG.1

EP 1 821 240 A2

**Description**

The present invention relates to Digital Multimedia Broadcasting (DMB), and more particularly to a DMB receiving terminal.

In general, Digital Multimedia Broadcasting (DMB) refers to broadcasting services for providing high image quality, high sound quality and advanced services to users in place of analog broadcasting. Moreover, interest in DMB services for enabling the DMB to be seen and heard while a DMB receiving terminal is moving has been increased with the development of DMB and mobile communication technologies. Accordingly, a non-directional DMB receiving antenna has been currently attached to a mobile communication terminal such that the DMB can be received through the mobile communication terminal.

In order to increase users' convenience in such a general DMB, telephone numbers can be inserted into a broadcast to support information communications, merchandise sales and the like while broadcasting, such that the user can easily connect to an organization related to the corresponding broadcast, i.e., a sales store where specific goods are sold, a relief organization or the like, in an advertisement or relief broadcast.

However, in this case, a telephone number flag having been previously contracted with a receiving side should be inserted such that the receiving side of the DMB can recognize telephone number data contained in a Transport Stream (TS) broadcasted from a transmitting side of the DMB in the general DMB. Further, in a case where the user selects the telephone number while broadcasting the DMB, the receiving side checks the telephone number flag. If there exists the telephone number data, the receiving side outputs the telephone number in accordance with the data and services related thereto, and are provided to the user. Here, the services refer to services for enabling the user to send a message in accordance with the telephone number or to speak by telephone, and services such as wireless connection using the telephone number.

However, in this case, communication enterprisers, terminal manufacturers and the like need to change the structure of the data broadcast in the DMB so as to use the telephone number data and the telephone number data flag as described above. Moreover, the receiving side need to perform a procedure of individually identifying telephone number flags for identification of the telephone number data in each received Transport Stream (TS) having the telephone number data contained therein.

Thus, since the structure of transmission data need to be changed for the purpose of transmitting the aforementioned telephone number data, and a process of checking telephone number data for each transmitted TS packet should be performed. In such a general DMB, there is a problem in that performance of both sides is lowered during the transmission/reception of DMB data.

Accordingly, the present invention has been made to solve at least the above-mentioned problems occurring in the prior art. It is the object of the present invention to provide a DMB receiving device and method that can recognize telephone numbers broadcast in the DMB and store them as telephone number data without changing a structure of data transmitted through the DMB.

This object is solved by the subject matter of the independent claims.

Preferred embodiments are defined in the dependent claims.

It is an aspect of the present invention to provide a DMB receiving device and method, which can recognize telephone numbers broadcast in the DMB and store them as telephone number data without any process except DMB transmission/reception processes having been previously provided in the process of transmitting/receiving the DMB.

In order to accomplish the object and other aspects of the present invention, according to an aspect of the present invention, there is provided a device for detecting telephone number information from Digital Multimedia Broadcasting (DMB) in a DMB receiving terminal, which includes a DMB receiver for receiving DMB; a scanner for scanning an I-frame in DMB data received and decoded from the received DMB; a character extractor for detecting a Region Of Interest (ROI) where telephone number information is contained in a display region of the DMB receiving terminal from the scanned I-frame, binarizing the detected ROI, removing a non-text region from the binarized ROI, and then partitioning the ROI into character regions containing at least one blob recognizable as a numeral, character or symbol and a character string region composed of the character regions; a telephone number extractor for analyzing each of the character regions of the extracted character string region to determine if the character string region is a numeral region containing only numerals, extracting only the character string region determined as a numeral string, recognizing the blobs contained in the extracted character string region as numeral data through a weighted value method, and combining at least one telephone number using the recognized numeral data; and a controller for scanning an I-frame of a broadcasting screen under currently broadcasting if the I-frame received from the DMB is decoded, applying the scanned I-frame to the character extractor so as to extract the character string region, applying the extracted character string region to the telephone number extractor so as to extract numeral data in accordance with the character string region, and combining the numeral data as telephone numbers to output the telephone numbers.

In order to accomplish the object and other aspects of the present invention, according to another aspect of the present invention, there is provided a method for detecting telephone number information from DMB in a DMB receiving terminal, which includes scanning an I-frame in DMB data received and decoded from the received DMB; detecting a Region Of Interest (ROI) where telephone number information is contained in a display region of the DMB receiving terminal from the scanned I-frame; binarizing the detected ROI; removing a region regarded as a non-text region in accordance with a preset text critical value; partitioning the ROI into character regions containing at least one blob recognizable as a numeral, character or symbol and a character string region composed of the character regions; analyzing each of the character regions of the extracted character string region in accordance with a preset condition to extract only the character string region determined as a numeral string; recognizing the blobs of the extracted numeral region as numeral data; and combining the recognized numeral data to produce telephone numbers.

The present invention will be more apparent from the following detailed description taken in conjunction with the accompanying drawings, in which:

FIG. 1 is a block diagram showing a configuration of a Digital Multimedia Broadcasting (DMB) receiving terminal according to the present invention;

FIG. 2 is a flowchart illustrating a telephone number extraction operation of extracting a telephone number in a display region according to the present invention;

FIG. 3 is a flowchart illustrating an ROI extraction operation process of extracting an ROI in the telephone number extraction operation of the present invention;

FIG. 4 is are diagrams of the ROI extraction operation in the telephone number extraction operation of the present invention;

FIG. 5 is a flowchart illustrating a non-text region removal operation process of removing a non-text area in the telephone number extraction operation of the present invention;

FIG. 6 is a diagram of the non-text region removal operation in the telephone number extraction operation of the present invention;

FIG. 7 is a flowchart illustrating a character string and character region partition operation process of partitioning character strings and character regions from the extracted ROI according to the present invention;

FIG. 8 is a diagram showing an example of a character string and character partition in the character string and character region partitioning operation of the present invention;

FIGS. 9A and 9B are flowcharts illustrating a numeral region extraction operation process of extracting a numeral region in the telephone number extraction operation of the present invention;

FIG. 10 is a diagram showing an example of determining the corresponding region is a numeral region in accordance with a blob contained in the corresponding numeral region in the numeral region extraction operation of the present invention; and

FIG. 11 is a flowchart illustrating an operation process of generating available telephone number combinations and storing them using numerals recognized from the extracted numeral region in the telephone number extraction operation of the present invention;

Hereinafter, preferred embodiments of the present invention will be described with reference to the accompanying drawings. In the following description, the same elements will be designated by the same reference numerals although they are shown in different drawings. Further, in the following description of the present invention, a detailed description of known functions and configurations incorporated herein will be omitted when it may make the subject matter of the present invention rather unclear.

First, a basic principle of the present invention will be described for furthering the understanding of the present invention. In the present invention, if Digital Multimedia Broadcasting (DMB) data is received, I-frame data is decoded in the received DMB data. Further, the decoded I-frame is scanned, and a Region OF Interest (ROI) is detected from the scanned data. Here, the ROI refers to a portion of a display region selected in accordance with a preset condition among object regions, such as an upper, lower, left or right portion of the display region, where a telephone number can be generally displayed in the DMB. Further, if the ROI is detected, the detected ROI is binarized, and a numeral region is extracted from the correspondent ROI by passing through a process of removing a non-text region from the binarized ROI and partitioning a character string and character of the correspondent ROI. Furthermore, blobs extracted from the extracted numeral region are recognized as numerals, and the telephone number is combined using the recognized numerals. Then, this is stored and output to a user. Accordingly, the user can receive a telephone number provided in the DMB without changing a general DMB data transmission/reception process, and connect in accordance with the provided telephone number in the present invention.

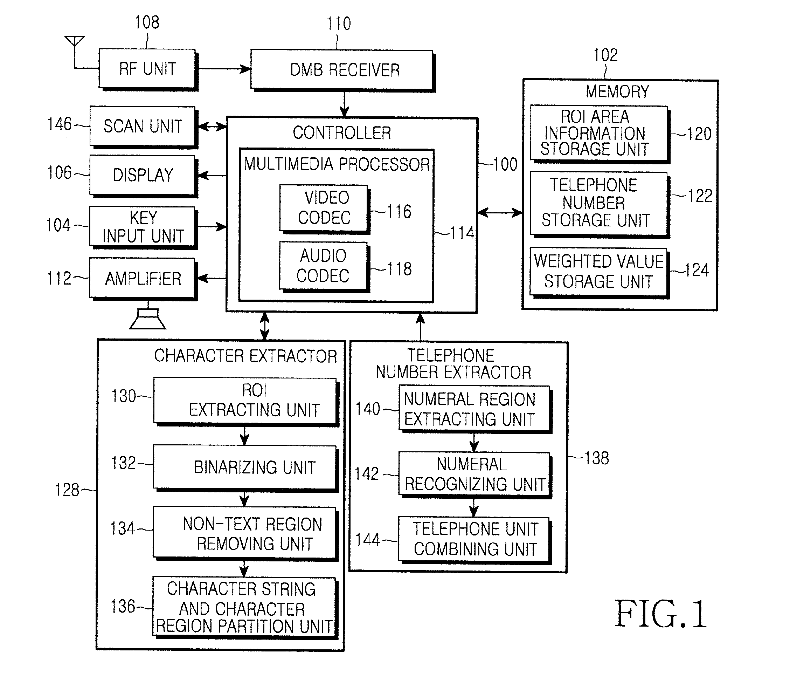

FIG. 1 is a block diagram showing a configuration of a DMB receiving terminal according to the present invention.

Referring to FIG. 1, in the DMB receiving terminal the present invention, a memory 102, a key input unit 104, a display 106, an amplifier 112, a DMB receiver 110, a scanner 146, a character extractor 128 and a telephone number extractor 138 are connected to a controller 100. The controller 100 receives a user's key input from the key input unit 104 and controls the display 106 to generate image information in accordance with the user's key input. Further, the controller 100 receives video and audio data contained in DMB data, input from the DMB receiver 110 so as to decode the audio and video data. Furthermore, the controller 100 outputs the video and audio data to the display 106 and the amplifier 114, respectively.

If DMB is received, the controller 100 scans an I-frame from the DMB through the character extractor 128 and detects an ROI from the scanned I-frame. The ROI is a region of interest as described above, and refers to a region where a character string or the like is contained in a display region.

However, in a general case, telephone number information is mainly displayed on an upper, lower, left or right portion of a display screen. Thus, the controller 100 selects such a region in accordance with a preset order to set a region where it is likely that the telephone number information is contained in the correspondent region as the ROI, and detects it the telephone number.

If there exists a detected ROI, the controller 100 binarizes the detected ROI into binary data through the character extractor 128 s. In a case where there exists a blob that does not fit in with a general text size in the binarized ROI, it is removed. Here, the blob refers to one connected mass displayed on a display region. Further, horizontal and vertical projections are performed in the display region in which the non-text region is removed to extract how many character string regions containing blobs recognizable as characters exist in the correspondent ROI and how many regions of blobs recognizable as the characters exist in each of the character string regions. The respective character string and character regions are then partitioned. The character is at least one blob that can be recognized as characters, numerals, general symbols and the like.

If the character string and character regions are partitioned in the detected ROI, the controller 100 analyzes the partitioned character regions in accordance with a preset condition to determine whether a blob in the character region is a character, numeral or symbol. Further, the controller 100 determines if the character string region is a numeral region containing only numerals. Then, the controller 100 extracts only the numeral region that is a region containing only the blobs recognized as characters and symbols in the character string regions. Further, the blobs recognizable as numerals contained in the extracted numeral region are recognized as numeral data through a preset weighted value method. Furthermore, the controller 100 combines available telephone number data using the recognized numeral data so as to provide the telephone number to the user. Thus, the present invention can recognize a telephone number broadcast in the DMB and provide this telephone number data without changing the structure of data transmitted through the DMB.

The memory 102 connected to the aforementioned controller 100 is provided with storage regions for storing regional information in the detected ROI and the combined telephone number data. Further, the memory 102 is provided a storage region for storing weighted value data used in the present invention, including weighted value data used for numeral data recognition of the blobs recognized as numerals. Hereinafter, the storage region having the region information on the ROI provided in the memory 102 stored therein is referred to as an information storage unit 120, and the region having the combined telephone number data stored therein is referred to as a telephone number storage unit 122. Further, the region having the weighted data stored therein is referred to as a weighted value storage unit 124.

Such a memory 102 can include a Read Only Memory (ROM), a flash memory, a Random Access Memory (RAM) and the like. The ROM stores programs for processing and control of the controller 100 and various kinds of referential data. The RAM provides a working memory of the controller 100. The flash memory provides a region for storing a variety of renewable data for storage.

As described above, the character extractor 128 includes an ROI extracting unit 130 for extracting an ROI from the scanned I-frame, a binarizing unit 132 for binarizing the extracted ROI, a non-text region removing unit 134 for removing blobs corresponding to a non-text region from the binarized ROI, and a character string and character partition unit 136 for partitioning characters composed of blobs and a character string composed of the characters in the ROI having the non-text region removed therefrom.

The ROI extracting unit 130 checks portions of the display region from the scanned I-frame in a priority order under the control of the controller 100 so as to determine if an ROI is contained in accordance with the ROI detection condition. The portion of the preset display region refers to a region corresponding to a portion of a longitudinal length in the entire display region in the case of the upper or lower portion, or a region corresponding to a portion of a lateral length in the entire display region in the case of the left or right portion.

For example, a region ranging from a lowermost point of the display region to 1/5 of the entire longitudinal length in an upper direction may be the portion of the preset display region in a case of the lower portion. Further, a region ranging from an uppermost point of the display region to 1/5 of the entire longitudinal length in a lower direction may be the portion of the preset display region in a case of the upper portion. Similarly, a region ranging from a leftmost or rightmost point of the display region to 1/5 of the entire lateral length in a right or left direction may be the portion of the preset display region in the left or right portion, respectively. Further, the ROI extracting unit 130 detects if there exists an ROI from the corresponding region in the display regions set in such a manner in accordance with the preset detection condition.

Here, there may be a variety of methods for detecting an ROI through the ROI extracting unit 130. As an example of the methods, it is determined if there exists a region where a horizontal scanning line, in which a change in specific chrominance signal level is less than a preset error value is consecutively displayed so that a presence of the ROI can be detected. For example, in a case of a broadcast screen of the DMB, the broadcast screen is configured using chrominance signals Y, Cb and Cr, and they are output. In this case, the broadcast screen is configured through outputs of horizontal scanning lines, with signals at different levels from one another in accordance with a video signal.

A region where a telephone number and the like are output is frequently output inside a region divided with a background color composed of a certain chrominance signal level. In a case where the inside of the region is divided with such a specific background color, there are configured horizontal scanning lines in which a change in chrominance signal is below a fixed value. In a case of a broadcast screen such as a moving image, a change in chrominance signal contained in the horizontal scanning signals become very large so that it exceeds the fixed value.

A degree of the change in chrominance signal may be the ROI detection condition. In a case where there exists a region where the number of horizontal scanning lines, in which a change in specific chrominance signal set as a reference is below a fixed value, is more than a preset number in the currently selected display region, the ROI extracting unit 130 determines that the region is an ROI, and extracts information on upper, lower, left and right coordinates and a width and height from the correspondent region to store them as ROI information.

The binarizing unit 132 binarizes the detected ROI. Here, the binarizing unit 132 may use an Otsu's binarization method using a histogram to binarize the detected ROI. In this case, the binarizing unit 132 binarizes the chrominance signals contained in the ROI as white or black with a critical value in which the histogram has the maximum dispersion as a reference using signal Y (gray level) in the chrominance signals contained in the detected ROI. The binarizing unit 132 partitions a portion with a change in the chrominance signal in the ROI into black and portions except that into white. In a case where the ROI is reversed, i.e., in a case where the background of the ROI is binarized as black and a portion with a change in the chrominance signal in the ROI is binarized as white, the binarizing unit 132 reverses it such that the portion with a change in the chrominance signal is portioned as black and the background of the ROI is partitioned as white.

The non-text region removing unit 134 determines if a blob in the ROI partitioned as black and white is a text or non-text region. The blob is a mass and refers to one mass of blobs connected to one another in the regions expressed by black.

The non-text region removing unit 134 evaluates the upper, lower, left and right coordinates and the height and width of each of the blobs, and in the case where the height and width of the blob is greater than a critical value of a generally used text, this is recognized a non-text region to remove it. For example, in the case where telephone number information and an outline surrounding the telephone number information is contained in the ROI, since the outline has a value much greater than the width of the critical value of a general text region, the non-text region removing unit 134 recognizes that the outline is a non-text region and removes it.

The character string and character region partition unit 136 partitions the blobs in which the non-text region is removed so as to partition the ROI into a character region, which is a region of a blob recognizable as a character and a character string region composed of the character regions. The character string and character region partition unit 136 may use horizontal and vertical projection methods. The blobs contained in the ROI are projected using the horizontal projection method so that a string region of the corresponding blobs are partitioned, and the partitioned string regions of the blobs are recognized as the respective character string regions. In the case where the height of the character string region does not fit in with the preset condition, the character string and character region partition unit 136 does not recognize the string region of the blobs as a character string region. Further, the character string and character region partition unit 136 perform the vertical projection onto the region recognized as a character string region to partition it into character regions constituting each of the character string regions.

As described above, the telephone number extractor 138 determines if the regions, each of which is partitioned into the character string region, and the character regions contains blobs recognizable as numerals. The telephone number extractor 138 includes a numeral region extracting unit 140 for extracting only a numeral region containing blobs recognizable as numerals, a numeral recognizing unit 142 for recognizing blobs recognizable as the numerals through the controller 100 as real numeral data, and a telephone number combining unit 144 for generating telephone numbers that can be combined using the recognized numeral data.

The numeral region extracting unit 140 checks a characteristic of the partitioned character string region so as to determine if the character string region is a numeral region containing only blobs recognizable as numerals in accordance with a numeral read condition. The numeral read condition refers to conditions such as whether or not the number of blobs composed of the character region is one, whether or not a difference between an interval of at least one blob recognized as a corresponding character and the interval median of the character region extracted from the corresponding character string region has a certain level or more, or whether the mean height of blobs contained in the character region has a certain level greater or less than the height median of the character region. Blobs that do not correspond to the numeral read condition are recognized as characters.

The numeral recognizing unit 142 determines if the character string region is a numeral region for each of the recognized characters. In the case where the character string region is detected as a numeral region, the numeral recognizing unit 142 recognizes the correspondent character string region as a numeral region and extracts it. The numeral recognizing unit 142 analyzes characters of the blobs recognized as the numeral region to recognize the correspondent blobs as numeral data. The numeral recognizing unit 142 can recognize the blobs as numeral data through various methods. As an example among the methods, the numeral recognizing unit 142 uses weighted value data produced by instructing a neural network in desired numeral data so that it can recognize to which numeral each of the blobs in the numeral region correspond. The numeral recognizing unit 142 stores the recognized numerals as the numeral data.

The telephone number combining unit 144 using the recognized numeral data produces an available telephone number combination. In a case where a specific symbol such as a blank or a dash is contained in the numeral string, the telephone number combining unit 144 produces an available telephone number combination for each region divided due to the blank or specific symbol. The telephone number combining unit 144 stores a result of the produced telephone number combination.

The controller 100 outputs the combined telephone numbers through the display 106. The user can select any one of the telephone numbers in accordance with the telephone number combination result to use it. The user can select any one of the telephone numbers to receive a variety of services provided in accordance with the telephone number, including a telephone call or a message. In the present invention, telephone number information can be provided to a user without changing a data transmission process of general DMB from DMB transmitting and receiving sides.

The DMB receiver 110 receives a broadcasted DMB signal, and A/D converts it and then applies it to the controller 100. The scanner 146 scans a decoded I-frame under the control of the controller 100. The key input unit 104 has various kinds of keys including numeral keys as described above and provides a key input from a user to the controller 100. The RF unit 108 functions to receive RF signals and converts the received signals into IF (Intermediate Frequency) signals to output them a baseband processor provided in the DMB receiver 110. The baseband processor is BBA (Baseband Analog ASIC) for providing an interface between the controller100 and the RF unit 108, and converts an analog IF signal applied from the RF unit 108 into a digital signal with a baseband to apply it to the DMB receiver 110. The amplifier 112 connected to the controller 100 amplifies an audio signal output to a speaker and adjusts a volume of the speaker under the control of the controller 100.

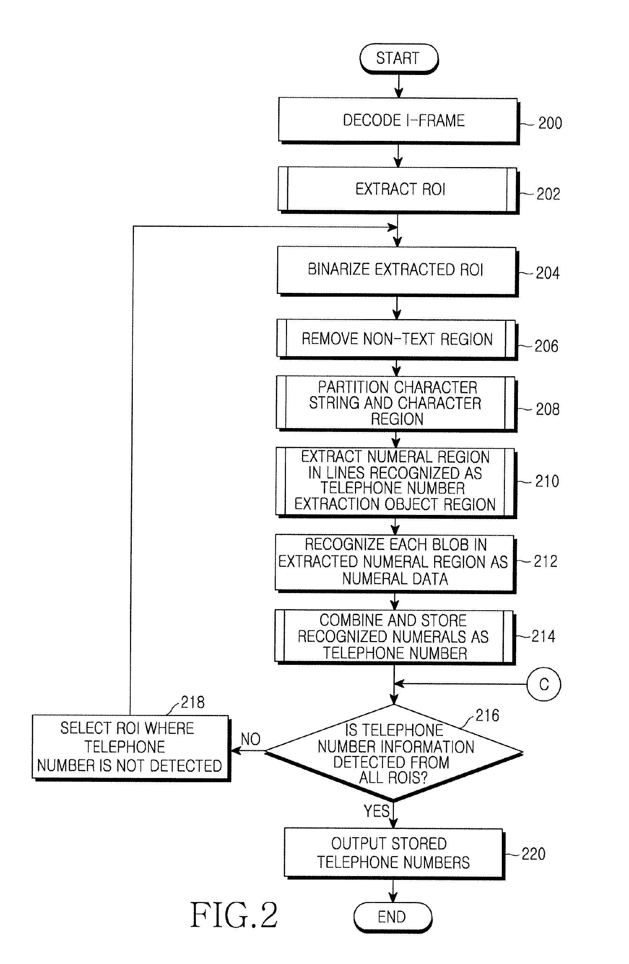

FIG. 2 is a flowchart illustrating a telephone number extraction operation of extracting a telephone number in a display region according to the present invention.

Referring to FIG. 2, in the case where DMB data is received, the controller 100 proceeds to step 200 to decode I-frame from the received DMB data, and to scan the decoded I-frame. In the case where a user makes a selection; the controller 100 proceeds to step 202 so as to extract a telephone number from the scanned I-frame, and extracts an ROI through the ROI extracting unit 130 of the character extractor 128.

The controller 100 sequentially selects portions of the display region in accordance with a preset order to determine if there exists a region where horizontal scanning lines, in which a change in level of a specific chrominance signal is less than a preset error value in the selected display region, are consecutively displayed, so that the presence of an ROI region is detected. In the chrominance signal, a change in level of the chrominance signal can be first measured with signal Y as a reference. If the ROI is not detected in spite of signal Y as a reference, the ROI can be detected with signal Cb as a reference, and if the ROI is not detected in spite of signal Cb as a reference, the ROI can be detected with signal Cr as a reference. It will be apparent that detections using chrominance signals Cb and Cr are not performed in the case where the ROI is detected with signal Y as a reference.

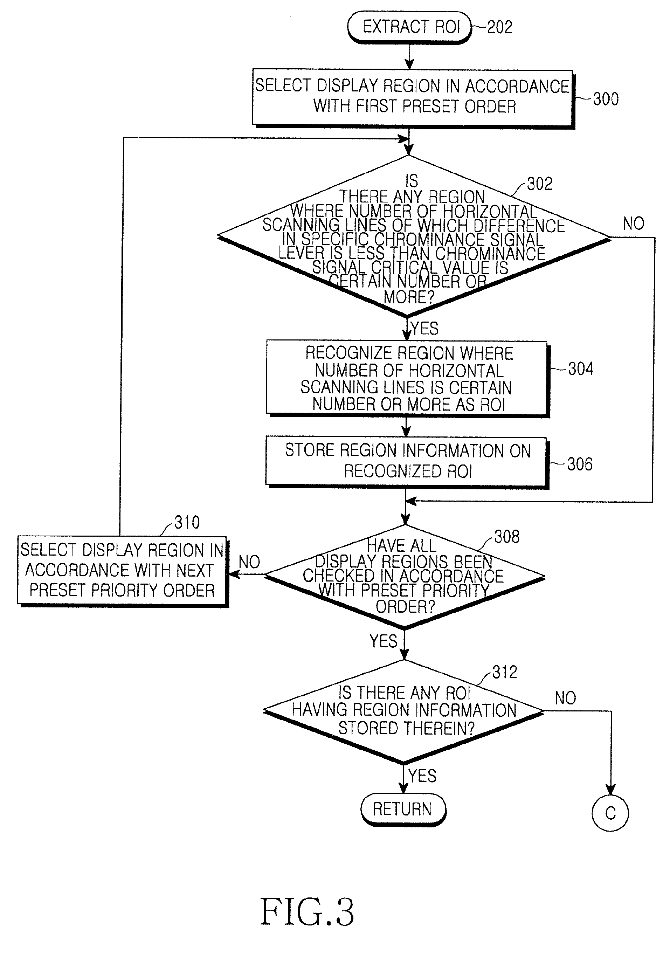

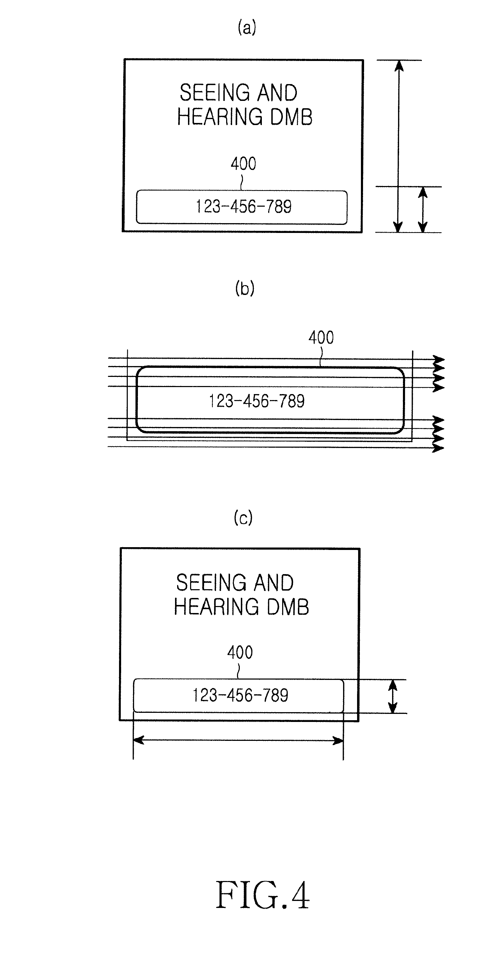

The selection order of the display region may be set in accordance with an order of a region where a telephone number is most frequently displayed in a general DMB. For example, if the order, in which the telephone numbers are displayed according to frequency, is an order of a lower, upper, right and left of the display region, the controller 100 detects if there exists an ROI in the preset lower portion of the display region, and then detects if there exists an ROI in an order of the upper, right and left. If an ROI is detected, the controller 100 stores region information on the detected ROI. Such an ROI extraction process of step 202 will be described in detail below with reference to FIGS. 3 and 4.

If the ROI is extracted at step 202, the controller 100 proceeds to step 204 to binarize the detected ROI. As described above, an Otsu's binarization method using a histogram may be used to binarize the extracted ROI at step 204. If a value of the corresponding chrominance signal is greater than or equal to a preset critical value using signal Y among chrominance signals contained in the ROI, the binarizing unit 132 can binarize it as black, and if it is less than the preset critical value, the binarizing unit 132 can binarize it as white. However, if the size of the ROI binarized as black is greater than that of the ROI binarized as white, the controller 100 determines that the ROI is reversed, and may again reverse it to be binarized.

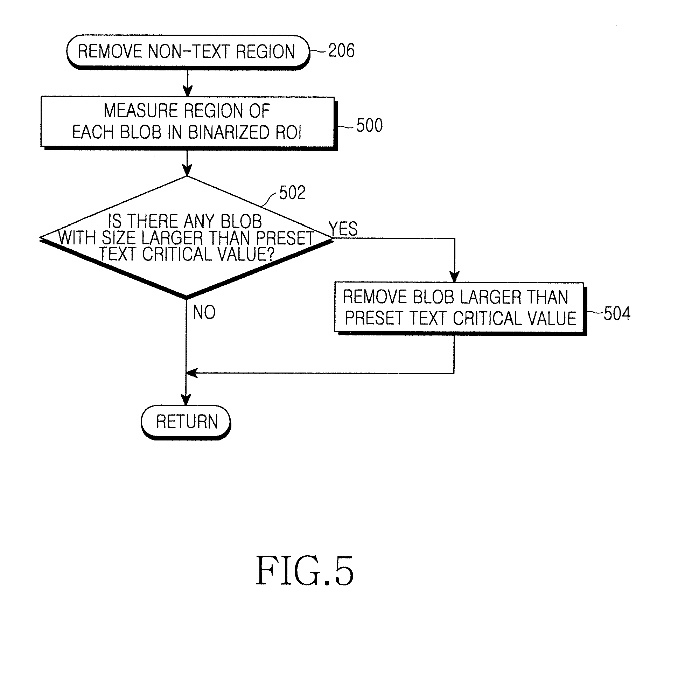

If the binarization is completed at step 204, the controller 100 proceeds to step 206 so as to remove a non-text region from the binarized ROI. The controller 100 evaluates upper, lower, left and right coordinates of each blob of the binarized ROI, and determines if the height and width of each of the blobs exceeds a preset text critical value at step 206. The blob refers to a region where one connected mass is binarized as black. In a case where there exists a blob of which height and width exceed the preset text critical value among the blobs, the controller 100 removes the correspondent blob. If step 206 is completed, the blobs of which height and width is less than the text critical value, i.e., the blobs recognizable as characters are left in the current correspondent ROI. Such a process of step 206 will be described in detail below with reference to FIG. 5.

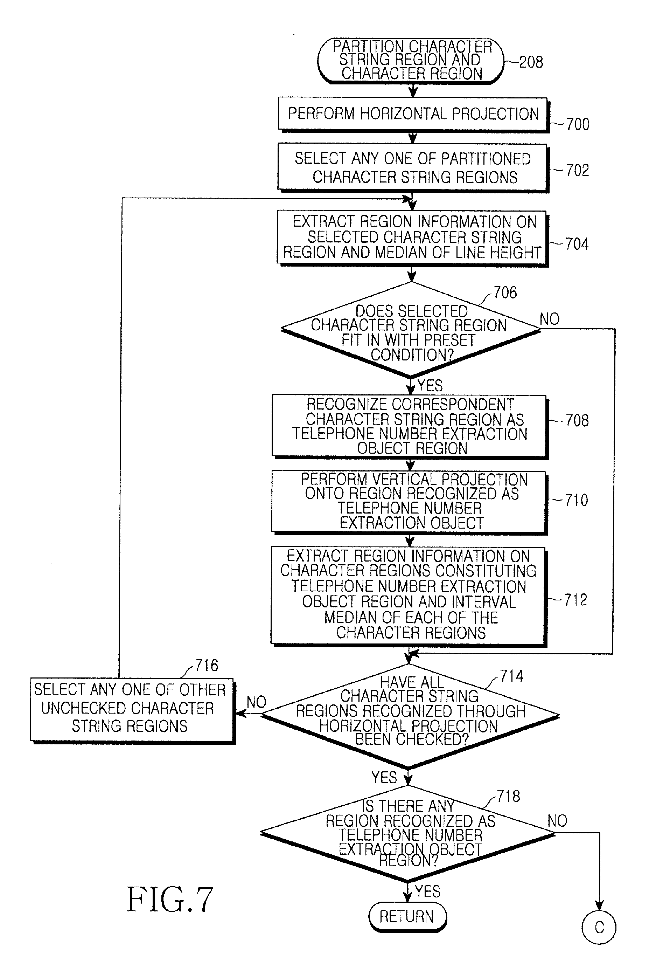

If step 206 is completed, the controller 100 proceeds to step 208 so as to partition a character string and character region from the ROI. The character string region refers to a region where blobs recognizable as character regions are contained. First, the controller 100 performs a horizontal projection for partitioning the character string region from the ROI so as to determine how many character string regions exist in the correspondent ROI, and determine if the character string regions are regions recognized as telephone number extraction objects in accordance with a preset condition. Only the character string regions that meet the condition are extracted. The controller 100 evaluates the height median of the character string regions, and in the case where the height of the corresponding character string region is less than a minimum value of a preset projection height or greater than a maximum value thereof, the controller 100 may determine that the character string region is not a telephone number extraction object region. The maximum and minimum values of the projection height will be described below with reference to FIG. 7.

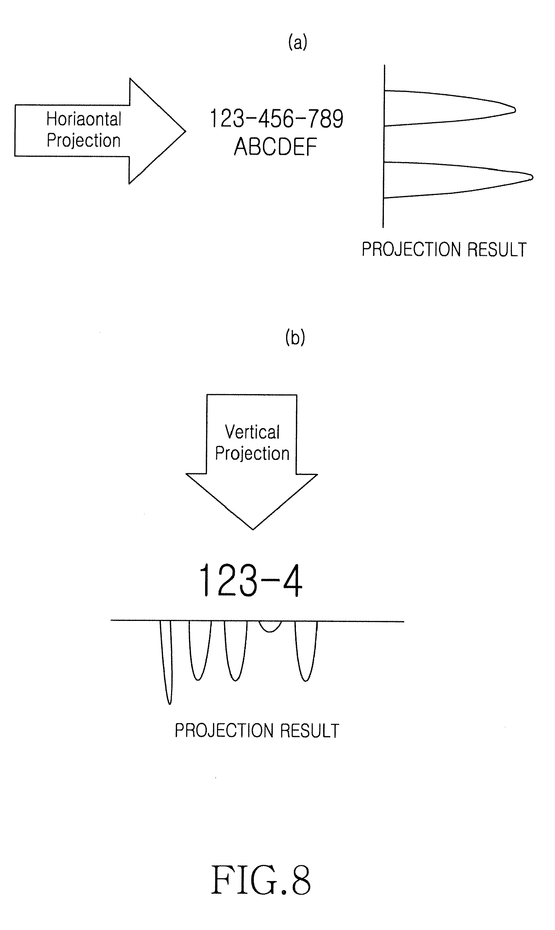

The controller 100 performs a vertical projection onto only the telephone number extraction object region so as to partition character regions constituting the corresponding telephone number extraction object region. The controller 100 evaluates region information containing information on the coordinates, height and width of each of the partitioned character regions and an interval median, which is a median of intervals between the respective character regions so as to store them as information on the corresponding telephone number extraction object region. Such a process will be discussed in detail below with reference to FIGS. 7 and 8.

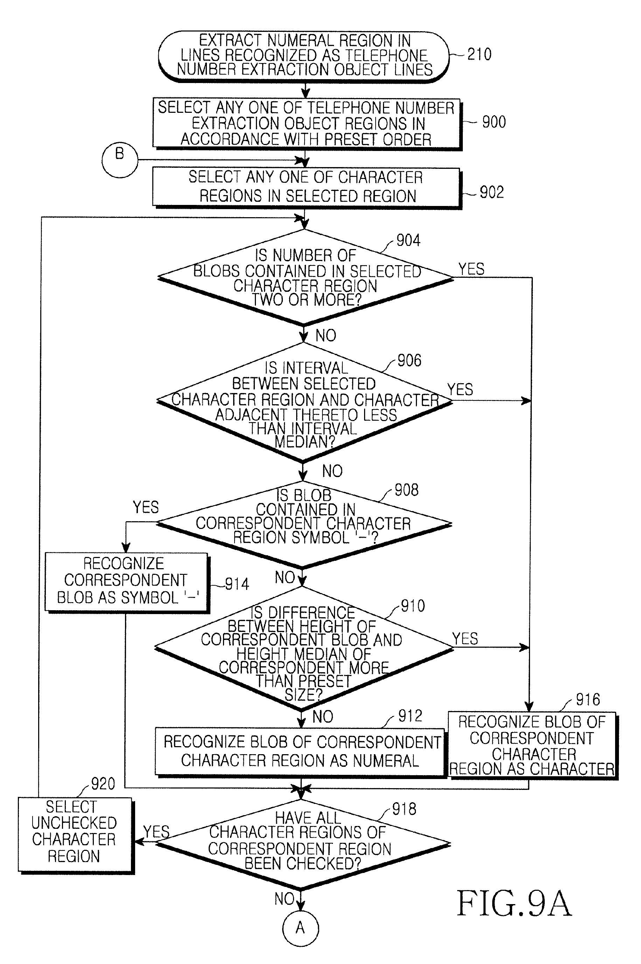

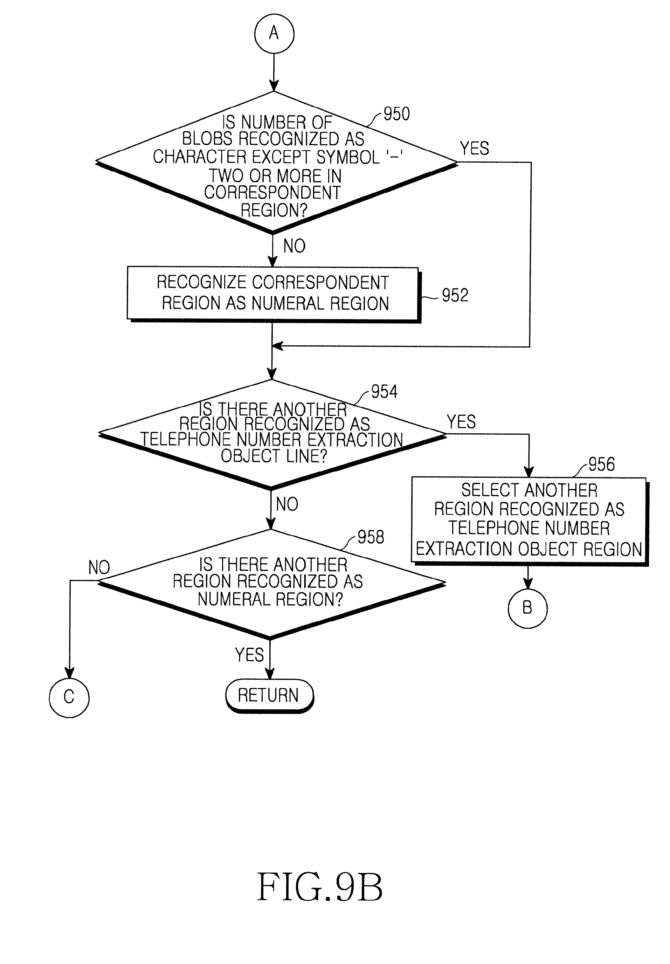

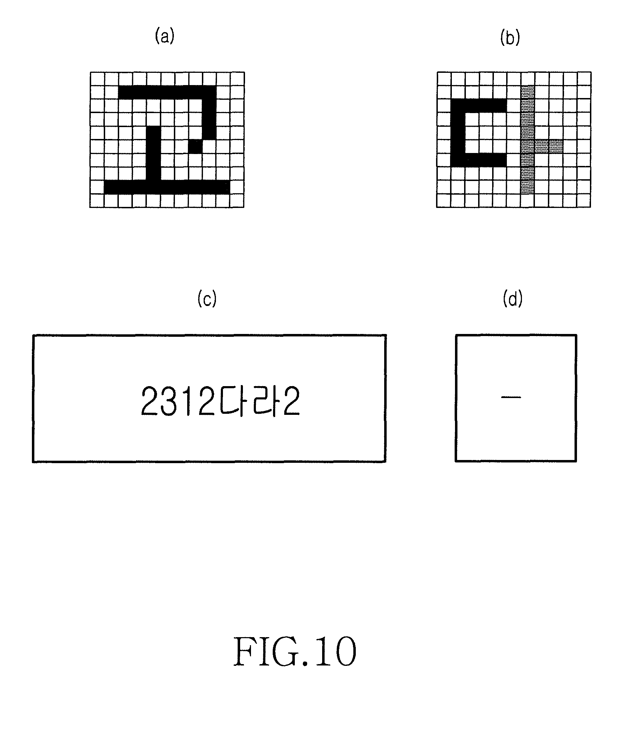

If the telephone number extraction object region and region information thereon are extracted at step 208, the controller 100 proceeds to step 210. Step 210 is a step at which the controller 100 checks each of the character regions contained in the telephone number extraction object region so as to determine if the telephone number extraction object region is a numeral region containing only the blobs recognizable as numerals. The controller 100 determines if the corresponding character region contains a plurality of blobs, if the height of the blob contained in the correspondent character region has a difference with an error greater than the height median of the characters extracted from the corresponding telephone number extraction object region, and if a difference of intervals between the corresponding selected character region and the adjacent character regions is greater by a certain error value than the interval median with respect to each of the character regions constituting the telephone number extraction object region, so as to determine if the telephone number extraction object region contains only the blobs recognizable as numerals at step 210. In the case where the telephone number extraction object region is not a numeral region, the blobs contained in the respective character regions contained in the corresponding region are recognized as blobs recognizable as numerals. Such a process of step 210 will be discussed in detail below with reference to FIGS. 9A, 9B and 10.

The controller 100 proceeds to step 212 so as to analyze characteristics of the blobs recognizable as numerals, and to recognize the respective blobs as numeral data. Step 212 may be a process of recognizing to which numeral each blob of the numeral region corresponds by using weighted value data obtained from desired numeral data in which a neural network is instructed. The controller 100 stores the recognized numerals as numeral data.

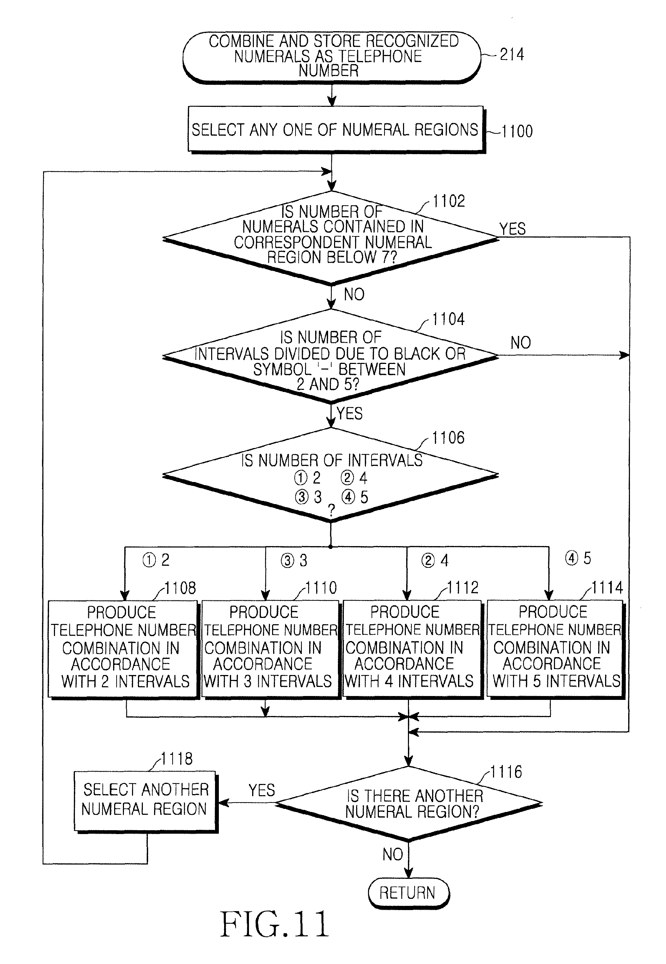

The controller 100 proceeds to step 214 so as to produce a telephone number capable of being combined using the stored numeral data. Step 214 may be a process of producing an available telephone number combination for each region divided due to the blank or specific symbol in a case where a specific symbol such as a blank or a dash is contained in the numeral string. Such a process of combining a telephone number using the numeral data will be discussed in detail below with reference to FIG. 11.

The controller 100 proceeds to step 216 so as to determine if all the ROIs extracted at step 202 have passed through the telephone number detection process from step 204 to step 214. If there is any ROI that has not passed through the telephone number detection process as the results of step 216, the controller 100 proceeds to step 218 so as to select the corresponding ROI. The controller 100 repeats the process from step 204 to step 214 with respect to the selected ROI.

If all the ROIs have already passed through the step of detecting the telephone information at step 216, the controller 100 proceeds to step 220 so as to output telephone numbers that have been combined. Then, the user may select any one of the telephone numbers, and make a phone call or receive provided services such as message transmission through the selected telephone numbers. The user can receive a telephone number provided in the DMB without changing a general DMB data transmission process between DMB transmitting and receiving sides in the present invention.

FIG. 3 is a flowchart illustrating an ROI extraction operation process of extracting an ROI at step 202 in the telephone number extraction operation of the present invention. FIG. 4 is diagram of the ROI extraction operation in the telephone number extraction operation of the present invention.

Referring to FIG. 3, if the controller 100 scans the decoded I-frame from the received DMB data as step 200, the controller 100 proceeds to step 300 so as to select any one display region in accordance with a first preset order.

The first preset order refers to a priority order in accordance with a region where a telephone number is most frequently displayed in a general DMB as described above. Although such a priority order may be set in an order of lower, upper, right and left portions, it will be apparent that this may be changed in some cases. The display region does not refer to an entire display region of the display 106 but to a certain portion preset in the entire display region as described above. The upper portion may be a region at a preset interval from the lowermost limit in the entire display region, and the lower portion may be a region at a preset interval from the uppermost limit in the entire display region.

An example such a display region will be described with reference to diagram (a) of FIG. 4. FIG. 4 is a diagram showing an example of a display region set as the lower region in the display region of a screen while seeing and hearing the DMB. In this case, the controller 100 selects a region corresponding to a portion in the entire height that is a longitudinal length of the entire display region to detect if there exists an ROI as shown in diagram (a) of FIG. 4 in the present invention.

In the case where a specific display region is selected in accordance with the preset priority order at step 300, the controller 100 proceeds to step 302 so as to determine if there exists a region where the number of horizontal scanning lines, of which a difference in specific chrominance signal is less than a preset chrominance signal critical value, is greater or equal to a certain number in the currently selected display region.

This is because in a case where telephone number information is generally displayed on a display screen, the telephone number is frequently displayed on a screen with a specific background color, and because the respective numbers are generally displayed as the same color in a case of the telephone number information as described above. In this case, since it will be apparent that the region having the telephone number information displayed therein has chrominance signals with a similar color greater than that having moving image information displayed therein, in a case of a display region where the difference in chrominance signal is less than a certain value, the region means that a region displayed as a similar color greater or equal to a certain size.

In a case where the region displayed as the similar color is greater or equal to a certain size, the controller 100 determines that it is likely that telephone number information is contained in such a region. In a case where there exists a region where the number of horizontal scanning lines of which difference in specific signal level is less than the chrominance signal critical value is greater or equal to a certain number as the check results of step 302, the controller 100 proceeds to step 304 to determine a region displayed as the similar color greater or equal to a certain size as an ROI, i.e., a region of interest.

The specific chrominance signal may be any one of signal Y, Cb or Cr. In this case, the controller 100 can detect the ROI with the level value of signal Y, Cb or Cr as a reference. The controller 100 can first detect if the ROI exists in the correspondent display region by checking if the number of horizontal scanning lines, of which difference in chrominance signal level is less than the critical value, is a greater or equal to certain number with the level value of signal Y as a reference. In a case where the ROI is not detected using the level value of signal Y, the ROI can be detected using the level value of signal Cb, and in a case where the ROI is not detected using the level value of signal Cb, the ROI can be detected using the level value of signal Cr.

An example of detecting the ROI will be described with reference to diagram (b) of FIG. 4. Diagram (b) of FIG. 4 is a diagram showing an example of a region where telephone number information on '123-456-789' is displayed. In this case, the telephone number information is generally displayed on a specific background color. The controller 100 detects a region where the number of horizontal scanning lines of which difference in specific chrominance signal level is less than a certain value is greater or equal to a certain number as shown in diagram (b) of FIG. 4. Further, since only the background color and the black telephone number information are displayed in the region shown in diagram (b) of FIG. 4, the number of horizontal scanning lines of which difference in specific chrominance signal level is less than a certain value is a certain number or less in this region. Then, the controller 100 recognizes the region shown in diagram (b) of FIG. 4 as the ROI at step 304.

The controller 100 proceeds to step 306 so as to store region information on the region recognized as the ROI. The region information refers to information on upper, lower, left and right coordinates of the region recognized as the ROI, and information on the width and height thereof. Diagram (c) of FIG. 4 shows an example of storing region information corresponding to the region recognized as the ROI in the same case as diagram (b) of FIG. 4. Referring to diagram (c) of FIG. 4, in a case where the ROI is recognized as shown in diagram (b) of FIG. 4, the controller 100 measures the width and height of the ROI through the upper and lower coordinates of the recognized ROI so as to store them as shown in diagram (c) of FIG. 4. The controller 100 proceeds to step 308.

In the case where the number of horizontal scanning lines of which difference in specific chrominance signal level is less that the preset chrominance signal critical value in the currently selected display region is less than a certain number at step 302, the controller 100 immediately proceeds to step 308. If the controller 100 proceeds to step 308 through step 302 or 306, it determines if all the display regions have passed through the ROI detection process in accordance with the preset priority order. In the case where all the display regions have not passed through the ROI detection process in accordance with the preset priority order as the determination results of step 308, the controller 100 proceeds to step 310 so as to select a display region in accordance with the next preset priority order. In this case, the controller 100 proceeds back to step 302 so as to detect if the number of horizontal scanning lines of which difference in specific chrominance signal level is less than the critical value is greater or equal to a certain number. The controller 100 repeats the processes from step 302 to 308 until all the display regions pass through the ROI detection process.

If all the display regions have passed the ROI detection process at step 308, the controller 100 proceeds to step 312 so as to determines if there exists an ROI having the region information stored therein, i.e., if there exists a detected ROI. In the case where there exists a detected ROI in the display regions, the controller 100 proceeds to step 204 so as to perform a process of binarizing the extracted ROI. In the case where there exists no detected ROI as the determination results of step 312, the controller 100 completes an operation of extracting a telephone number in the DMB screen. In this case, it will be apparent that a message informing that there exists no extracted telephone number may be output to the user.

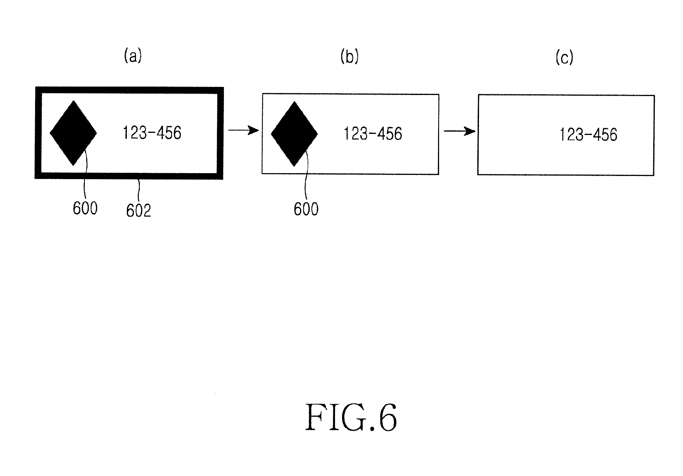

FIG. 5 is a flowchart illustrating a non-text region removal operation process of removing a non-text area at step 206 in the telephone number extraction operation of the present invention. FIG. 6 is an exemplary view of the non-text region removal operation in the telephone number extraction operation of the present invention.

Referring to FIG. 5, if the ROI binarization process is completed at step 204, the controller 100 of the DMB receiving terminal proceeds to step 500 so as to measure the region of each blob in the binarized ROI. The blob is a 'mass' as described above, and refers to one connected mass in regions displayed as black as the binarization results.

After the controller 100 has measured the region of each of the blobs in the ROI at step 500, it proceeds to step 502 so as to determine if the size of each of the blobs exceeds a preset text critical value. The text critical value is a value preset to extract only the blobs corresponding to a text. Generally, width and height critical values corresponding to a text character may be the text critical value. In this case, if a difference between the width and height of the blob and the width and height critical values contained in the preset text critical value is beyond a range of a certain error value, the blob may be determined not to be a text character. In the case of an outline in the ROI as an example, such a blob is one blob, but its width is much broader that the text character. In this case, the controller 100 determines that the blob is a non-text region, and removes it.

Such an example will be discussed with reference to FIG. 6. Diagram (a) of FIG. 6 is a view showing an ROI that contains blobs that are not text characters. In this case, the controller 100 measures the region of each of the blobs as step 500. Here, the ROI shown in diagram (a) of FIG. 6 is divided into a diagram of reference numeral 600, a frame of reference numeral 602, the respective numerals and the dash, and the size of each region is measured.

In this case, the controller 100 proceeds to step 502 so as to determine if there exists a blob in which the size of the measured region exceeds a certain error or is greater than the preset text critical value among the blobs. Thus, the ROI shown in diagram (a) of FIG. 6 has the frame 602 removed as shown in diagram (b) of FIG. 6, and has the diagram 600 removed as shown in diagram (c) of FIG. 6 through step 502. Consequently, only the blobs with widths and heights less than the text critical value are finally left as shown in diagram (c) of FIG. 6. In this case, the controller 100 recognizes the remaining blobs as characters, i.e., blobs recognizable as numerals, characters or symbols. The controller 100 proceeds to step 208 so as to perform an operation of partitioning the blobs contained in the character string and character region, which is a region in accordance with a string of blobs recognizable as characters, into the respective character regions from the ROI, where the blobs, of which width and height exceed a certain error or are greater than the text critical value, have been removed.

FIG. 7 is a flowchart illustrating a character string and character region partition operation process of partitioning character string and character regions from the extracted ROI according to the embodiment of the present invention. Further, FIG. 8 are diagrams showing an example of partitioning a character string and characters at step 208.

Referring to FIG. 7, if blobs in which the text critical value with the preset width and height exceed a certain error are removed at step 206, the controller 100 proceeds to step 700 so as to perform a horizontal projection onto the ROI. The horizontal projection refers to a process of recognizing how many regions of a string of blobs (hereinafter, referred to as a character string) recognizable as the character exist in the ROI as shown in diagram (a) of FIG. 8. That is, if the horizontal projection, i.e., projections are performed, the controller 100 can recognize how many character string regions exist in the ROI as shown in diagram (a) of FIG. 8.

The controller 100 proceeds to step 702 so as to select any one of at least one character string regions recognized through the horizontal projection. The controller 100 proceeds to step 704 so as to extract region information on the selected character string region and the height median of the string region. The height median refers to the height median of a region recognized as the character string region.

The controller 100 proceeds to step 706 so as to determine if the selected character string fits in with a preset condition, so that the controller 100 can detect if the character string region is a telephone number extraction object region containing telephone number information. This is for the purpose of determining if the selected character string region is a region composed of character regions with a certain height.

The projected height of the character string region may be used as a reference for determining if the character string region is a telephone number information extraction object region at step 706. The character string region can be determined to be the telephone number extraction object region containing telephone number information only in a case where the projected height of the character string region exceeds a preset projection height maximum value or where the projected height is not below a preset projection height minimum value.

In this case, the projection height maximum value or the projection height minimum value may be relatively determined by means of the height median of the character string. The character string region can be determined to be a region containing the telephone number information only in a case where the projected height of the character string region is not excessively high or low for regarding it as a character string region as compared with the height median of the character string region. In this case, the projection height maximum value and the projection height minimum value can be calculated through the following Equations (1) and (2)

$$\text{Projection height maximum value} = \text{maximum weighted value} \times \text{height median of correspondent character string region} \dots\dots\dots\dots\dots\dots\dots\dots\dots\dots\dots (1)$$

$$\text{Projection height minimum value} = \text{minimum weighted value} \times \text{height median of correspondent character string region} \dots\dots\dots\dots\dots\dots\dots\dots\dots\dots (2)$$

The maximum and minimum weighted values are values preset through experimentation or the like. In this case, since the projection height maximum value and the projection height minimum value can be evaluated in accordance with a height median calculated depending on the height of a correspondent character string region, it can be determined if the character string region is a region containing a telephone number in accordance with the height of the character string region.

The reason why the character string regions are filtered once more at step 706, even though the non-text region has been removed at step 206, is for the purpose of more precisely extracting the character string regions containing telephone number information. For example, blobs determined not to be text are removed using the preset text critical value at step 206. However, in a case where the text critical value is excessively restricted, it is likely that even the telephone number information may be removed by being determined to be a non-text region. Accordingly, the text critical value is generally set to a degree in that only blobs having a large difference from text can be removed.

In this case, if only the non-text region removal is performed, there may be a case where blobs remain by being recognized as the text region although they are not characters. To this end, a ratio of the height median and the height of the character string region is extracted once more using the maximum and minimum values at step 706. In the case where the height of the character string region is abnormally high or low for determining to be a region containing the blobs recognizable as characters, the corresponding character string region is recognized to have other blobs except the blobs recognizable as a character so that it is not recognized as a telephone number extraction object region for extracting a telephone number.

In the case where the currently selected character string region fits in with the preset condition (hereinafter, referred to as a character string condition) at step 706, the controller 100 proceeds to step 708 so as to recognize the corresponding character string region as a telephone number extraction object region. The controller 100 proceeds to step 710 so as to perform a vertical projection onto the region recognized as the telephone number extraction object region. The vertical projection is used for the purpose of partitioning character regions contained in the character string region recognized as the telephone number extraction object region.

Diagram (b) of FIG. 8 is a view showing an example of such a vertical projection. Referring to diagram (b) of FIG. 8, if the vertical projection is performed, there can be obtained information on positions of the character regions corresponding to the character string region, the width of each of the character regions, and intervals between the respective character regions. Accordingly, if the vertical projection is completed, the controller 100 proceeds to step 712 so as to extract the information on each of the character regions contained in the character string region, and to an interval median, that is a median of the intervals between the respective character regions through the information thereon. The controller 100 proceeds to step 714 to identify if all the character string regions recognized through a horizontal projection of the current ROI have been checked.

In a case where the currently selected character string region does not fit in with the preset condition at step 706, the controller 100 immediately proceeds to step 714. In step 714, the controller 100 determines if the telephone number extraction object region has been checked as the results of each of the character string regions recognized through the horizontal projection while passing through processes from step 704 to step 712. In the case where there exists a character string region that has not been yet checked among the recognized character string regions, the controller 100 proceeds to step 716 so as to select any one of the other unchecked character string regions, and to repeat the processes from step 704 to step 712.

If all the character string regions recognized through the horizontal projection have passed through the process of checking the presence of the telephone number extraction object region at step 714, the controller 100 proceeds to step 718 so as to determine if there have existed a character string region recognized as the telephone number extraction object region. In the case where there exists the region recognized as the telephone number extraction object region among the character string regions, the controller 100 proceeds to step 210 so as to extract a numeral region containing only the blobs recognizable as numerals among the regions having been recognized as the telephone number extraction object region. In a case where there exists no region recognized as the telephone number extraction object region at step 718, the controller 100 proceeds to step 216 to determine if all the ROIs extracted at step 202 have passed through the telephone number information extraction process from step 204 to step 214.

FIGS. 9A and 9B are flowcharts illustrating a process of extracting a numeral region at step 210 in the telephone number extraction operation of the present invention. Further, FIG. 10 is are diagrams showing an example of determining if the corresponding region is a numeral region in accordance with a blob contained in the corresponding numeral region in the numeral region extraction operation of the present invention.

Referring to FIG. 9A, in the case where the respective character string region and character regions constituting the ROI are partitioned, and there exists a character string region with a recognized the telephone number extraction object region among them at step 208, the controller 100 proceeds to step 900 so as to select any one of the telephone number extraction object regions in accordance with the preset order. The controller 100 proceeds to step 902 so as to select any one of the character regions partitioned through the vertical projection.

The controller 100 proceeds to step 904 so as to check if the number of blobs contained in the selected character region is greater than or equal to two. In a case where the selected character region contains two or more blobs, the controller 100 proceeds to step 916 so as to determine that the blobs contained in the character region are blobs recognizable not as numerals but as characters. Diagram (a) of FIG. 10 is a view showing an example of such a case.

Character '$\boxplus$' is composed of two blobs '¬' and '⊥' as shown in diagram (a) of FIG. 10. However, a numeral is generally a single blob such as 1, 2, 3 or the like. Thus, in a case of a character region containing two or more blobs, the blobs of the corresponding character region are not recognized as numerals. In this case, the controller 100 proceeds to step 916 so as to recognize the blobs of the selected character region as characters, and proceeds to step 918 so as to check if all the character regions in the currently selected telephone number extraction object region are selected.

In the case where the selected character region is composed of one blob at step 904, the controller 100 proceeds to step 906 so as to check if the width in accordance with the interval between the selected character region and a character region adjacent thereto is less than a certain error value in accordance with the interval median extracted from the currently selected telephone number extraction object region. In a case where the width of the character region adjacent to the currently selected character region is less than over a certain error value of the interval median, the controller 100 proceeds to step 916 so as to recognize the corresponding character region as a region of the blobs recognizable as characters. The adjacent character region refers to any one of character regions positioned to the left or right of the selected character region.

This is because, the case of characters such as '가', '나' and the like, in which a vowel is positioned to the right of a consonant, it is likely that the vowel and consonant may be recognized as individual character regions as the results of the vertical projection. In this case, if the vowel and consonant are recognized as individual character regions, the number of blobs contained in one character region is one, but the interval between the character regions becomes narrow.

Diagram (b) of FIG. 10 is a view showing an example of such a case. Referring to diagram (b) of FIG. 10, if a vowel and a consonant are recognized as individual character regions in a case of character '나', the interval between consonant 'ㄴ' and vowel 'ㅏ' becomes narrow by a certain error as shown in diagram (b) of FIG. 10. In this case, the interval between the characters is less than the interval median extracted from the character regions of the corresponding telephone number extraction object region. Accordingly, the controller 100 proceeds to step 916 so as to recognize the blobs in accordance with the selected character region as a character, and proceeds to step 918 so as to check if all the character regions of the currently selected telephone number extraction object region are selected.

In a case where the interval between the currently selected character region and the character region adjacent thereto is greater than the interval median extracted from the currently selected telephone number extraction object region at step 906, the controller 100 proceeds to step 908 so as to check if the selected character is a dash. This can be determined using a preset character of symbol '-'.

Diagram (d) of FIG. 10 is a view showing a characteristic of a dash. That is, it may be assumed that the height of symbol '-' is less than 2 or 3 pixels, and that the width thereof approximates to that of mean character regions as shown in diagram (d) of FIG. 10. In the case where the height of symbol '-' is less than the preset pixels, and the width thereof corresponds to the mean width or median of the character regions contained in the character string region, the blob contained in the selected character region can be recognized as a dash.

In the case where the blob of the selected character region is recognized as a dash as the recognition results of step 908, the controller 100 proceeds to step 914 so as to recognize the blob of the selected character region as a dash, and proceeds to step 918 so as to check if all the character regions of the currently selected telephone number extraction object region are selected.

Further, in a case where the blob of the correspondent character region is not a dash as the check results of step 908, the controller 100 proceeds to step 910 so as to evaluate a difference between the height of the blob contained in the correspondent character region and the height median of the currently selected telephone number extraction object region, and to check if the evaluated difference is above or below the preset size. This is for the purpose of extracting the blob contained in the character region by determining if it is not a numeral or a dash but another symbol or the like.

In the case of the horizontal projection, the entire character string region is projected to check if the entire character string region is a region containing telephone number information. However, in a case where a blob with a height less than each of the character regions is contained in the character string region, the blob with the low height cannot be extracted through the horizontal projection. Accordingly, in a case where the currently selected character region contains a blob with a height less than or greater than the height median extracted from the telephone number extraction object region through step 910, i.e., the currently selected character region is not a dash but is a character region containing a blob with a height less than or greater than another character region, the controller 100 proceeds to step 916 so as to recognize the blob contained in the corresponding character region as a character. The controller 100 proceeds to step 918 so as to check if all the character regions of the currently selected telephone number extraction object region are checked.

In the case where a difference between the height of the blob contained in the currently selected character region and the height median extracted from the correspondent telephone number extraction object region is less than the preset difference at step 910, the controller 100 proceeds to step 912 so as to recognize the currently selected character region as a numeral region containing only blobs recognizable as numerals. The controller 100 proceeds to step 918 so as to check if all the character regions of the currently selected telephone number extraction object region are checked. In the case where all the character regions contained in the currently selected telephone number extraction object region are not checked as the check results of step 918, the controller 100 proceeds to step 920 so as to select another character region that has not been checked. The controller 100 proceeds to step 904 so as to repeat the processes from step 904 to step 918 of determining whether the blobs contained in the selected character region are a character or a dash, or the blobs are blobs recognizable as numerals. However, in a case where all the character regions of the correspondent telephone number extraction object region are checked as the check results of step 918, the controller 100 proceeds to step 950 of FIG. 9B so as to check if two or more character regions containing blobs recognized as characters except a dash are consecutive in the correspondent line.

Further, in a case where two or more character regions containing blobs recognized as characters except a dash are not consecutive as the check results of step 950, the controller 100 proceeds to step 952 so as to recognize the currently selected telephone number extraction object region as a numeral region containing only the blobs recognizable as numerals. The controller 100 proceeds to step 954 so as to check if there exists another character string region recognized as the telephone number extraction object region.

In the case where two or more character regions containing blobs recognized as characters except a dash are consecutive in the correspondent telephone number extraction object region as shown in diagram (c) of FIG. 10, the controller 100 does not recognize the currently selected telephone number extraction object region as the numeral region. Thus, in this case, the controller 100 immediately proceeds from step 950 to step 954 so as to check if there exists another character string region recognized as the telephone number extraction object region.

In the case where there exists another character string region recognized as the telephone number extraction object region as the check results of step 954, the controller 100 proceeds to step 956 so as to select another character string region recognized as the current telephone number extraction objection region. The controller 100 proceeds to step 902 so as to repeat processes from step 902 to step 954. In a case where there exists no character string region recognized as the telephone number extraction object region at step 954, the controller 100 proceeds to step 958 so as to check if there exists any telephone number extraction region having been recognized as the numeral region. In the case where there exists no telephone number extraction object region recognized as the numeral region, the controller 100 proceeds to step 216 so as to check if all the ROIs extracted at step 202 have passed through the telephone number information detection process from step 204 to step 214. In the case where there exists the telephone number extraction object region recognized as the numeral region as the check results of step 958, the controller 100 proceeds to step 212 so as to recognize blobs of the region recognized as numeral data.

FIG. 11 is a flowchart illustrating a process of generating available telephone number combinations and storing them using numerals recognized from the extracted numeral region at step 214 in the telephone number extraction operation of the present invention.

Referring to FIG. 11, if the blobs of the numeral region are recognized as numeral data at step 214, the controller 100 proceeds to step 1100 so as to select any one of the regions recognized as the numeral regions. The controller 100 proceeds to step 1102 so as to check if the number of numeral data contained in the corresponding numeral region is less than 7. In the case where the number of numeral data is less than 7 as the check results of the number of numeral data, the controller 100 proceeds to step 1116 so as to check if there is another numeral region.

The reason why the controller 100 checks if the number of numerals contained in the numeral region is less than 7 at step 1102, is that the number of the least numeral data required in a telephone number combination is 7. In accordance with the number of numeral data contained in the numeral region is not greater than or equal to 7, any combination using the corresponding numeral data cannot become a telephone number. Accordingly, in a case where the number of numerals contained in the selected numeral region is less than 7, the controller 100 recognized that this is not the telephone number, and checks if there is another numeral region in the present invention.

In the case where the number of numerals contained in the correspondent numeral region is greater than or equal to 7 as the check results of step 1102, the controller 100 proceeds to step 1104 so as to check if the number of intervals divided due to a blank or a dash is between 2 or 5. This is because a telephone number, for example, is configured as a form in which the number of intervals divided due to a blank or a dash is at least two or more, and the maximum number of intervals is generally 4 to 5 in a case where a local number is contained. Thus, in a case where the number of intervals divided due to a blank or a dash is 1 or over 5, the controller 100 determines that the numeral data contained in the numeral region is not a telephone number, and proceeds to step 1116 so as to check if there is another numeral region.

In the case where the number of intervals divided due to a blank or a dash is from 2 to 5 at step 1104, the combination of a telephone number using the corresponding numeral data is possible. The controller 100 proceeds to step 1106 so as to produce a telephone number combination in accordance with whether the number of intervals divided due to a blank or a dash is 2, 3, 4 or 5. Thus, in a case where the number of intervals is 2, the controller 100 proceeds from step 1106 to step 1108 so as to combine a telephone number in accordance with 2 intervals and to produce it. In the case where the number of intervals is 3, the controller 100 proceeds from step 1106 to step 1110 so as to combine a telephone number in accordance with 3 intervals and to produce it. In the case where the number of intervals is 4, the controller 100 proceeds from step 1106 to step 1112 so as to combine a telephone number in accordance with 4 intervals and to produce it. In the case where the number of intervals is 5, the controller 100 proceeds from step 1106 to step 1114 so as to combine a telephone number in accordance with 5 intervals and to produce it.

The telephone number combination process in accordance with each of the intervals may be variously combined depending on numeral data of each of the intervals. For example, in the case where recognized numeral data is "1234-5678", since the number of divided intervals is two, the controller 100 proceeds from step 1106 to step 1108. In this case, the controller 100 can produce a variety of telephone number combinations using the numeral data. In the case of the numeral data, the controller 100 may produce not only "1234-5678" but also "123-5678" or "234-5678". In this case, the controller 100 may set not only "1234-5678" but also "123-5678" or "234-5678" as candidate telephone numbers so as to output them to a user.

In the case of a recognized numeral data is "123-45678", combinable telephone number data may be "123-4567" or "123-5678". The following Table 1 and Table 2 shows examples of telephone number combination rules applied in cases where the number of intervals is two and three, respectively.

**Table 1**

| Number of Numeral Data in First Interval | First Interval | Number of Numeral Data in Second Interval | Second Interval |
|---|---|---|---|
| 1 | (Impossible) | 1 | (Impossible) |
| | | 2 | (Impossible) |
| | | 3 | (Impossible) |
| | | 4 | (Impossible) |
| | | 5 | (Impossible) |
| 2 | (Impossible) | 1 | (Impossible) |
| | | 2 | (Impossible) |
| | | 3 | (Impossible) |
| | | 4 | (Impossible) |
| | | 5 | (Impossible) |

(continued)

| Number of Numeral Data in First Interval | First Interval | Number of Numeral Data in Second Interval | Second Interval |
|---|---|---|---|
| 3 | Possible | 1 | (Impossible) |
| | | 2 | (Impossible) |
| | | 3 | (Impossible) |
| | | 4 | Possible |
| | | 5 | Combination of 4 |
| 4 | Possible (Combination of 3 or 4) | 1 | (Impossible) |
| | | 2 | (Impossible) |
| | | 3 | (Impossible) |
| | | 4 | Possible |
| | | 5 | Combination of 4 |
| 5 | Possible (Combination of 3 or 4) | 1 | (Impossible) |
| | | 2 | (Impossible) |
| | | 3 | (Impossible) |
| | | 4 | Possible |
| | | 5 | Combination of 4 |

**Table 2**

| Number of Numeral Data First Interval | in First Interval | Number of Numeral Data in Second Interval | Second Interval | Number of Numeral Data in Third Interval | Third Interval |
|---|---|---|---|---|---|
| 1 | (Impossible) | 1 | (Impossible) | 1 | (Impossible) |
| | | 2 | (Impossible) | 2 | (Impossible) |
| | | 3 | (Impossible) | 3 | (Impossible) |
| | | 4 | (Impossible) | 4 | (Impossible) |
| | | 5 | (Impossible) | 5 | (Impossible) |
| 2 | Possible | 1 | (Impossible) | 1 | (Impossible) |
| | | 2 | (Impossible) | 2 | (Impossible) |
| | | 3 | Possible | 3 | (Impossible) |
| | | 4 | Combination of 3 or 4 | 4 | Possible |
| | | 5 | Combination of 3 or 4 | 5 | Combination of 4 |
| 3 | Possible (Combination of 2 or 3) | 1 | (Impossible) | 1 | (Impossible) |
| | | 2 | (Impossible) | 2 | (Impossible) |
| | | 3 | Possible | 3 | (Impossible) |
| | | 4 | Combination of 3 or 4 | 4 | Possible |
| | | 5 | Combination of 3 or 4 | 5 | Combination of 4 |

(continued)

| Number of Numeral Data First Interval | in First Interval | Number of Numeral Data in Second Interval | Second Interval | Number of Numeral Data in Third Interval | Third Interval |
|---|---|---|---|---|---|
| 4 | Possible (Combination of 2 or 3) | 1 | (Impossible) | 1 | (Impossible) |
| | | 2 | (Impossible) | 2 | (Impossible) |
| | | 3 | Possible | 3 | (Impossible) |
| | | 4 | Combination of 3 or 4 | 4 | Possible |
| | | 5 | Combination of 3 or 4 | 5 | Combination of 4 |
| 5 | Possible (Combination of 2 or 3) | 1 | (Impossible) | 1 | (Impossible) |
| | | 2 | (Impossible) | 2 | (Impossible) |
| | | 3 | Possible | 3 | (Impossible) |
| | | 4 | Combination of 3 or 4 | 4 | Possible |
| | | 5 | Combination of 3 or 4 | 5 | Combination of 4 |

As described above, Table 1 and Table 2 show examples of combinations in accordance with cases where the number of intervals is 2 and 3 in the telephone number combination rules depending on the intervals divided due to a blank or a dash. In the tables, 'Possible' means the recognized numeral data are immediately recognizable without a combination of the recognized numeral data, and 'Combination' means that candidate telephone numbers are produced by combining as many as the number of numerals described above using numeral recognition data in accordance with the corresponding intervals. In the case where the number of divided intervals is 2, and the number of numeral data contained in first and second intervals is 4 and 4, respectively, the controller 100 may combine two telephone numbers in which the number of numerals in the first interval is 3 and one telephone number in which the number of numerals in the first interval is 4.

Although transmitting and receiving sides of DMB do not apply any modification in a transmission process of the DMB, a telephone number intended to send to the receiving side can be transmitted to a user in the present invention. Further, there is an advantage in that since, in a case where telephone number extraction is started through a user's selection, the telephone information is extracted, it is unnecessary to detect whether or not telephone number data is contained in a correspondent packet for each received TS packet even at the receiving side in the present invention.

If the combination of telephone number is produced in such a manner, the controller 100 proceeds to step 216 so as to check if all the ROIs extracted at step 202 have passed through the telephone number information detection process from step 204 to 214. If there exists any ROI that has not passed through the telephone number detection process as the check results of step 216, the controller 100 proceeds to step 218 so as to select the correspondent ROI. The controller 100 again repeats the processes from step 204 to step 214 with respect to the selected ROI. However, in a case where any ROI that has not passed through the telephone number detection process does not exist any longer at step 216, the controller 100 outputs the stored telephone numbers to enable the user to select any one thereof. In the case where the telephone numbers extracted from the respective ROIs are identical with one another, it will be apparent that any one of them is displayed to the user.

Further, although not shown in FIG. 2, if any one of the telephone numbers is selected, it will be apparent that the controller 100 may perform a process of dialing the selected telephone number in accordance with the user's selection, and sending a message in accordance with the corresponding telephone number.

Thus, there is an advantage in that the present invention can recognize telephone numbers broadcast in the DMB and store them as telephone number data without changing the structure of data transmitted through the DMB.

Particularly, although there is shown a process of display telephone numbers to allow a user to select any one thereof, if the telephone numbers are extracted and stored form the all the detected ROIs in the present invention, it will be apparent that, in a case where there exists no telephone numbers required by the user among the extracted telephone numbers, a re-recognition process capable of performing this again may be further performed. In this case, if the re-recognition is selected by the user, the controller 100 repeats the process of scanning the I-frame again, extracting numeral data from the scanned I-frame, and then combining them as telephone numbers.

While the invention has been shown and described with reference to certain preferred embodiments thereof, it will be understood by those skilled in the art that various changes in form and details may be made therein without departing from the scope of the invention as defined by the appended claims.

**Claims**

1. A device for detecting telephone number information from Digital Multimedia Broadcasting, DMB, in a DMB receiving terminal, comprising:

   a DMB receiver for receiving DMB;
   a scanner for scanning an I-frame in DMB data received and decoded from the received DMB;
   a character extractor for detecting a Region Of Interest, ROI, where telephone number information is contained in a display region of the DMB receiving terminal from the scanned I-frame, binarizing the detected ROI, removing a non-text region from the binarized ROI, and partitioning the ROI into character regions containing at least one blob recognizable as a numeral, character or symbol and a character string region composed of the character regions;
   a telephone number extractor for analyzing each of the character regions of the extracted character string region in accordance with a preset condition to determine if the character string region is a numeral region containing only numerals, extracting only the character string region determined as a numeral string, recognizing the blobs contained in the extracted character string region as numeral data through a preset weighted value method, and combining at least one telephone number using the recognized numeral data; and
   a controller for scanning an I-frame of a broadcasting screen under current broadcasting if the I-frame received from the DMB is decoded, applying the scanned I-frame to the character extractor to extract the character string region, applying the extracted character string region to the telephone number extractor to extract numeral data in accordance with the character string region, and combining the numeral data as telephone numbers.

2. The device as claimed in claim 1, wherein the character extractor comprises:

   an ROI extracting unit for detecting the ROI, and extracting region information on the detected ROI;
   a binarizing unit for performing binarization for the detected ROI;
   a non-text area removing unit for removing the detected non-text region in accordance with a preset non-text region detection condition from the binarized ROI; and
   a character string and character area partitioning unit for partitioning a character string region and character regions constituting the character string region from the ROI in which the non-text region is removed.

3. The device as claimed in claim 2, wherein the ROI extracting unit determines if an ROI is contained in a portion of the preset display region depending on an ROI detection condition based on a priority order set through a frequency at which the telephone number information is displayed.

4. The device as claimed in claim 3, wherein the priority order is of a lower region of the display region, an upper region of the display region, a right region of the display region, and a left region of the display region.

5. The device as claimed in claim 3, wherein a region where the number of horizontal scanning lines of which a change in specific chrominance signal level is less than a preset chrominance signal critical value is repeated for a preset number of times in the portion of the display region selected in accordance with the priority order is selected as the ROI.

6. The device as claimed in claim 5, wherein the specific chrominance signal is a signal Y among signals Y, Cb and Cr, which are used as screen output signals in the DMB.

7. The device as claimed in claim 6, wherein, if no ROI is detected as the result of detecting the ROI by setting signal Y as a chrominance signal, the ROI extracting unit sequentially sets signals Cb and Cr as the specific chrominance signals.

8. The device as claimed in one of claims 2 to 7, wherein the binarizing unit uses an Otsu's binarization method using a histogram.

9. The device as claimed in one of claims 2 to 7, wherein a blob which exceeds width and height critical values is removed.

10. The device as claimed in one of claims 2 to 9, wherein the character string and character region partition unit partitions character regions contained in the correspondent ROI, and evaluates the height median of each of the corresponding character string region so as to extract only the character string regions, in which the height of the corresponding character string region is less than a preset projection height minimum value or does not exceed a preset projection height maximum value, as telephone number extraction object regions that are objects from which a telephone number is extracted.

11. The device as claimed in claim 10, wherein the projection height maximum value and the projection height minimum value are calculated by;

projection height maximum value = maximum weighted value $\times$ height median of correspondent character string region

projection height minimum value = minimum weighted value $\times$ height median of correspondent character string region

wherein the maximum and minimum weighted values are preset weighted values.

12. The device as claimed in claim 10 or 11, wherein the telephone number extractor comprises:

a numeral region extracting unit for analyzing each character region of the telephone number extraction object region to extract a numeral region containing only blobs recognizable as numerals among the corresponding telephone number extraction object regions;

a numeral recognizing unit for recognizing blobs, which are contained in the extracted numeral region and recognizable as numerals, as numeral data; and

a telephone number combining unit for combining the numeral data recognized through the numeral recognizing unit to produce telephone number information.

13. The device as claimed in claim 12, wherein the numeral region extracting unit selects any one of at least one character region contained in the telephone number extraction object region, determines if at least one blob contained in the corresponding character region in accordance with a preset numeral reading condition is composed of characters, and determines if the character string region is a numeral region containing only the blobs recognizable as numerals in accordance with the number of character regions containing the blob determined as the character among the character regions contained in the character string.

14. The device as claimed in claim 13, wherein the numeral reading condition is where the number of blobs contained in the character region is one, where an interval between the character region and another character region adjacent thereto and an interval between at least one blobs recognized as the correspondent character are less than a certain error value by the interval median that is a median of the character regions extracted from the currently selected telephone number object region, or where the height of the corresponding character region is less than or equal to a certain level than the height median extracted from the currently selected telephone number extraction object region.

15. The device as claimed in claim 13, wherein if the character string region contains the character regions containing blobs recognized as two or more characters, the numeral region extracting unit recognizes that the character region is not the numeral region.

16. The device as claimed in claim 12, wherein the numeral recognizing unit recognizes to which numeral each blob of the numeral region corresponds by using a weighted value obtained from desired numeral data.

17. The device as claimed in claim 12, wherein the telephone number combining unit combines numeral data in accordance with each interval divided due to a blank or a dash contained in the character string region so as to produce telephone numbers in accordance with each of the divided intervals.

18. The device as claimed in claim 17, wherein, if the number of intervals divided due to the blank or the dash is 2, the telephone number combining unit produces telephone numbers in accordance with a combination rule as follows:

| Number of Numeral Data in First Interval | First Interval | Number of Numeral Data in Second Interval | Second Interval |
|---|---|---|---|
| 1 | (Impossible) | 1 | (Impossible) |
| | | 2 | (Impossible) |
| | | 3 | (Impossible) |
| | | 4 | (Impossible) |
| | | 5 | (Impossible) |
| 2 | (Impossible) | 1 | (Impossible) |
| | | 2 | (Impossible) |
| | | 3 | (Impossible) |
| | | 4 | (Impossible) |
| | | 5 | (Impossible) |
| 3 | Possible | 1 | (Impossible) |
| | | 2 | (Impossible) |
| | | 3 | (Impossible) |
| | | 4 | Possible |
| | | 5 | Combination of 4 |
| 4 | Possible (Combination of 3 or 4) | 1 | (Impossible) |
| | | 2 | (Impossible) |
| | | 3 | (Impossible) |
| | | 4 | Possible |
| | | 5 | Combination of 4 |
| 5 | Possible (Combination of 3 or 4) | 1 | (Impossible) |
| | | 2 | (Impossible) |
| | | 3 | (Impossible) |
| | | 4 | Possible |
| | | 5 | Combination of 4 |

wherein 'Possible' means the recognized numeral data are immediately recognizable without combination of the recognized numeral data, and 'Combination' means that candidate telephone numbers are produced by combining numerals described above using numeral recognition data in accordance with the correspondent intervals.

**19.** The device as claimed in claim 17, wherein, if the number of intervals divided due to the blank or the dash is 3, the telephone number combining unit produces telephone numbers in accordance with a combination rule as follows:

| Number of Numeral Data in First Interval | First Interval | Number of Numeral Data in Second Interval | Second Interval | Number of Numeral Data in Third Interval | Third Interval |
|---|---|---|---|---|---|
| 1 | (Impossible) | 1 | (Impossible) | 1 | (Impossible) |
| | | 2 | (Impossible) | 2 | (Impossible) |
| | | 3 | (Impossible) | 3 | (Impossible) |
| | | 4 | (Impossible) | 4 | (Impossible) |
| | | 5 | (Impossible) | 5 | (Impossible) |
| 2 | Possible | 1 | (Impossible) | 1 | (Impossible) |
| | | 2 | (Impossible) | 2 | (Impossible) |
| | | 3 | Possible | 3 | (Impossible) |
| | | 4 | Combination of 3 or 4 | 4 | Possible |
| | | 5 | Combination of 3 or 4 | 5 | Combination of 4 |
| 3 | Possible (Combination of 2 or 3) | 1 | (Impossible) | 1 | (Impossible) |
| | | 2 | (Impossible) | 2 | (Impossible) |
| | | 3 | Possible | 3 | (Impossible) |
| | | 4 | Combination of 3 or 4 | 4 | Possible |
| | | 5 | Combination of 3 or 4 | 5 | Combination of 4 |
| 4 | Possible (Combination of 2 or 3) | 1 | (Impossible) | 1 | (Impossible) |
| | | 2 | (Impossible) | 2 | (Impossible) |
| | | 3 | Possible | 3 | (Impossible) |
| | | 4 | Combination of 3 or 4 | 4 | Possible |
| | | 5 | Combination of 3 or 4 | 5 | Combination of 4 |
| 5 | Possible (Combination of 2 or 3) | 1 | (Impossible) | 1 | (Impossible) |
| | | 2 | (Impossible) | 2 | (Impossible) |
| | | 3 | Possible | 3 | (Impossible) |
| | | 4 | Combination of 3 or 4 | 4 | Possible |
| | | 5 | Combination of 3 or 4 | 5 | Combination of 4 |

wherein 'Possible' means the recognized numeral data is immediately recognizable without combination of the recognized numeral data, and 'Combination' means that candidate telephone numbers are produced by combining numerals described above using numeral recognition data in accordance with the correspondent intervals.

20. The device as claimed in one of claims 1 to 19, wherein if the user selects telephone number re-recognition, the controller repeats a process of scanning the I-frame, and extracting numeral data from the scanned I-frame.

21. A method for detecting telephone number information from DMB, Digital Multimedia Broadcasting, in a DMB receiving terminal, comprising:

(a) scanning an I-frame in DMB data received and decoded from the received DMB;

(b) detecting a Region Of Interest, ROI, where telephone number information is contained in a display region of the DMB receiving terminal from the scanned I-frame;

(c) binarizing the detected ROI;

(d) removing a region regarded as a non-text region in accordance with a preset text critical value;

(e) partitioning the ROI into character regions containing at least one blob recognizable as a numeral, character or symbol and a character string region composed of the character regions;

(f) analyzing each of the character regions of the extracted character string region in accordance with a preset condition to extract only the character string region determined as a numeral string;

(g) recognizing the blobs of the extracted numeral region as numeral data; and

(h) combining the recognized numeral data to produce telephone numbers.

22. The method as claimed in claim 21, wherein step (b):

selecting a portion of the display region in accordance with the preset order;

determining a region as an ROI region where the number of horizontal scanning lines of which change in specific chrominance signal level is less than a preset chrominance signal critical value is repeated for a preset number of times in the selected display region; and

region information on the recognized ROI.

23. The method as claimed in claim 22, wherein the display region selection step sequentially selects a portion of the preset display region in accordance with a priority order set through a frequency at which the telephone number information is displayed.

24. The method as claimed in claim 23, wherein the display region selection step selects the portion of the display region in the following order: a lower region t of the display region, an upper region of the display region, a right region of the display region, and a left region of the display region.

25. The method as claimed in one of claims 22 to 24, wherein a signal Y is set as the specific chrominance signal among signals Y, Cb and Cr, which are used as screen output signals in the DMB.

26. The method as claimed in claim 25, wherein signal Cb is set as the specific chrominance signal to use it in a case where the ROI is not detected in the signal Y, and sets signal Cr as the specific chrominance signal if the ROI is not detected through the use of signal Cb as the specific chrominance signal for use.

27. The method as claimed in one of claims 21 to 26, wherein step (c) uses an Otsu's binarization method using a histogram.

28. The method as claimed in one of claims 21 to 27, wherein t step (d) comprises:

measuring the region of each blob in the binarized ROI; and

removing a blob of which its width and height exceeds any one of width and height critical values contained in the preset text critical value among the measured blobs.

29. The method as claimed in claim 28, wherein step (e) comprises:

performing horizontal projections to partition the character string regions from the ROI where the non-text region is removed;

selecting any one of the partitioned character string regions, and extracting region information on the selected character string region and the height median of the character string regions;

determining if the character string region is a telephone number extraction object region, in which the character string region becomes an object from which a telephone number will be extracted, using the extracted height median; and

performing vertical projections onto a telephone extraction object region to partition character regions constituting the correspondent character string region, and to extract the interval median, that is a median of intervals between region information on each of the character regions and the character region in a case where the character string region is the telephone number extraction object region.

30. The method as claimed in claim 29, wherein if the height of the selected character string region is not greater than or less than a preset projection height minimum value, the telephone extraction object region extraction step determines the selected character string region as the telephone number extraction object region.

31. The method as claimed in claim 30, wherein the projection height maximum value and the projection height minimum value are calculated by
projection height maximum value = maximum weighted value × height median of correspondent character string region
projection height minimum value = minimum weighted value × height median of correspondent character string region
wherein the maximum and minimum weighted values are preset weighted values.

32. The method as claimed in claim 31, wherein step (f) comprises:

selecting any one of character string regions recognized as the telephone number extraction object region, and selecting any one of character regions constituting the selected character string region;
determining if the number of blobs contained in the selected character region is greater or equal to two, and recognizing the blobs of the selected character region as characters in a case of the number of blobs contained in the selected character region are greater than or equal to two;
determining if an interval between the selected character region and the character region adjacent thereto is narrower by a certain error value than that in accordance with the interval median extracted from intervals between the respective character regions contained in the selected telephone number extraction objection region, in a case where the number of blobs contained in the selected character region is one;
recognizing that the selected character region contains a blob recognized as a character in a case where the interval between the selected character region and the character region adjacent thereto is narrower by a certain error value than that in accordance with the interval median, determining if the height of the selected character region has a difference greater than a preset error from the height median of the selected character string region;
recognizing the character region as a region containing blobs recognizable as numerals in a case where a difference between the height of the blob contained in the selected character region and the height median of the selected character string region is less than the preset error; and
recognizing the character string region as a numeral region containing blobs recognizable as numerals in a case where two or more character regions containing blobs recognized as characters are not consecutive among the character regions contained in the character string region.

33. The method as claimed in claim 32, wher further comprising determining if the selected character region contains a blob recognizable as a specific symbol.

34. The method as claimed in claim 33, wherein the specific symbol is a dash.

35. The method as claimed in claim 34, wherein, if the height of the blob contained in the selected character region is 3 pixels or less, and the width thereof corresponds to a width mean value or median of the character regions contained in the character string region, the blob contained in the character region is recognized as a dash.

36. The method as claimed in claim 34, wherein which numeral each blob of the numeral region corresponds is determined by using a weighted value obtained from desired numeral data.

37. The method as claimed in one of claims 32 to 36, further comprising:

selecting any one of the telephone number extraction object regions recognized as numeral regions, and determining the number of blobs recognizable as numerals contained in the numeral region is below a certain number; and
combining telephone numbers for each interval in accordance with the intervals divided due to a blank or a specific symbol in the numeral region.

38. The method as claimed in claim 36, wherein if the number of blobs recognizable as the numerals is greater than or equal to 7, the numeral number check step determines that the numeral region is a region containing a telephone number.

39. The method as claimed in claim 37, wherein the specific symbol is a dash.

**40.** The method as claimed in claim 37, wherein if the number of intervals divided due to a blank or a dash is 2, the telephone number combining unit produces telephone numbers in accordance with a combination rule as follows:

| Number of Numeral Data in First Interval | First Interval | Number of Numeral Data in Second Interval | Second Interval |
|---|---|---|---|
| 1 | (Impossible) | 1 | (Impossible) |
| | | 2 | (Impossible) |
| | | 3 | (Impossible) |
| | | 4 | (Impossible) |
| | | 5 | (Impossible) |
| 2 | (Impossible) | 1 | (Impossible) |
| | | 2 | (Impossible) |
| | | 3 | (Impossible) |
| | | 4 | (Impossible) |
| | | 5 | (Impossible) |
| 3 | Possible | 1 | (Impossible) |
| | | 2 | (Impossible) |
| | | 3 | (Impossible) |
| | | 4 | Possible |
| | | 5 | Combination of 4 |
| 4 | Possible (Combination of 3 or 4) | 1 | (Impossible) |
| | | 2 | (Impossible) |
| | | 3 | (Impossible) |
| | | 4 | Possible |
| | | 5 | Combination of 4 |
| 5 | Possible (Combination of 3 or 4) | 1 | (Impossible) |
| | | 2 | (Impossible) |
| | | 3 | (Impossible) |
| | | 4 | Possible |
| | | 5 | Combination of 4 |

wherein 'Possible' means the recognized numeral data are immediately recognizable without combination of the recognized numeral data, and 'Combination' means that candidate telephone numbers are produced by combining numerals described above using numeral recognition data in accordance with the correspondent intervals.

**41.** The method as claimed in claim 37, wherein, in a case where the number of intervals divided due to a blank or a dash is 3, the telephone number combining unit produces telephone numbers in accordance with a combination rule as follows:

| Number of Numeral Data In First Interval | First Interval | Number of Numeral Data in Second Interval | Second Interval | Number of Numeral Data in Third Interval | Third Interval |
|---|---|---|---|---|---|
| 1 | (Impossible) | 1 | (Impossible) | 1 | (Impossible) |
| | | 2 | (Impossible) | 2 | (Impossible) |
| | | 3 | (Impossible) | 3 | (Impossible) |
| | | 4 | (Impossible) | 4 | (Impossible) |
| | | 5 | (Impossible) | 5 | (Impossible) |
| 2 | Possible | 1 | (Impossible) | 1 | (Impossible) |
| | | 2 | (Impossible) | 2 | (Impossible) |
| | | 3 | Possible | 3 | (Impossible) |
| | | 4 | Combination of 3 or 4 | 4 | Possible |
| | | 5 | Combination of 3 or 4 | 5 | Combination of 4 |
| 3 | Possible (Combination of 2 or 3) | 1 | (Impossible) | 1 | (Impossible) |
| | | 2 | (Impossible) | 2 | (Impossible) |
| | | 3 | Possible | 3 | (Impossible) |
| | | 4 | Combination of 3 or 4 | 4 | Possible |
| | | 5 | Combination of 3 or 4 | 5 | Combination of 4 |
| 4 | Possible (Combination of 2 or 3) | 1 | (Impossible) | 1 | (Impossible) |
| | | 2 | (Impossible) | 2 | (Impossible) |
| | | 3 | Possible | 3 | (Impossible) |
| | | 4 | Combination of 3 or 4 | 4 | Possible |
| | | 5 | Combination of 3 or 4 | 5 | Combination of 4 |
| 5 | Possible (Combination of 2 or 3) | 1 | (Impossible) | 1 | (Impossible) |
| | | 2 | (Impossible) | 2 | (Impossible) |
| | | 3 | Possible | 3 | (Impossible) |
| | | 4 | Combination of 3 or 4 | 4 | Possible |
| | | 5 | Combination of 3 or 4 | 5 | Combination of 4 |

wherein 'Possible' means the recognized numeral data are immediately recognizable without combination of the recognized numeral data, and 'Combination' means that candidate telephone numbers are produced by combining numerals described above using numeral recognition data in accordance with the correspondent intervals.

**42.** The method as claimed in one of claims 21 to 41, further comprising repeatedly performing the I-frame scan, the ROI detection, the binarization, the non-text removal, the character string and character partition, the numeral region extraction, the numeral data recognition and the telephone number production so as to extract telephone numbers again, in a case where the user selects telephone number re-recognition.

FIG.1

START

DECODE I-FRAME — 200

EXTRACT ROI — 202

BINARIZE EXTRACTED ROI — 204

REMOVE NON-TEXT REGION — 206

PARTITION CHARACTER STRING AND CHARACTER REGION — 208

EXTRACT NUMERAL REGION IN LINES RECOGNIZED AS TELEPHONE NUMBER EXTRACTION OBJECT REGION — 210

RECOGNIZE EACH BLOB IN EXTRACTED NUMERAL REGION AS NUMERAL DATA — 212

COMBINE AND STORE RECOGNIZED NUMERALS AS TELEPHONE NUMBER — 214

C

218
SELECT ROI WHERE TELEPHONE NUMBER IS NOT DETECTED

NO

216
IS TELEPHONE NUMBER INFORMATION DETECTED FROM ALL ROIS?

YES

OUTPUT STORED TELEPHONE NUMBERS — 220

END

FIG.2

EXTRACT ROI —202

SELECT DISPLAY REGION IN ACCORDANCE
WITH FIRST PRESET ORDER ——300

IS
THERE ANY REGION
WHERE NUMBER OF HORIZONTAL
SCANNING LINES OF WHICH DIFFERENCE
IN SPECIFIC CHROMINANCE SIGNAL
LEVER IS LESS THAN CHROMINANCE
SIGNAL CRITICAL VALUE IS
CERTAIN NUMBER OR
MORE? —302

NO

YES

RECOGNIZE REGION WHERE
NUMBER OF HORIZONTAL
SCANNING LINES IS CERTAIN
NUMBER OR MORE AS ROI ——304

STORE REGION INFORMATION ON
RECOGNIZED ROI ——306

SELECT DISPLAY REGION IN
ACCORDANCE WITH NEXT
PRESET PRIORITY ORDER —310

NO

HAVE ALL
DISPLAY REGIONS BEEN
CHECKED IN ACCORDANCE
WITH PRESET PRIORITY
ORDER? —308

YES

IS THERE ANY ROI
HAVING REGION INFORMATION
STORED THEREIN? —312

NO

YES

RETURN

C

FIG.3

(a)

SEEING AND
HEARING DMB

400

123-456-789

(b)

400

123-456-789

(c)

SEEING AND
HEARING DMB

400

123-456-789

FIG.4

REMOVE NON-TEXT REGION ─206

MEASURE REGION OF
EACH BLOB IN BINARIZED ROI ─500

502

IS THERE ANY BLOB
WITH SIZE LARGER THAN PRESET
TEXT CRITICAL VALUE?

YES

NO

REMOVE BLOB LARGER THAN
PRESET TEXT CRITICAL VALUE ─504

RETURN

FIG.5

(a)        (b)        (c)

123-456    123-456    123-456

600    602    600

FIG.6

```
           ╭─────────────────────╮
          ( PARTITION CHARACTER   )
          │  STRING REGION AND    │──208
          ( CHARACTER REGION      )
           ╰─────────────────────╯
                    │
                    ▼
        ┌─────────────────────────────┐
        │ PERFORM HORIZONTAL PROJECTION│──700
        └─────────────────────────────┘
                    │
                    ▼
        ┌─────────────────────────────┐
        │  SELECT ANY ONE OF PARTITIONED│──702
        │   CHARACTER STRING REGIONS   │
        └─────────────────────────────┘
                    │
                    ▼
        ┌─────────────────────────────┐
        │ EXTRACT REGION INFORMATION ON│
        │   SELECTED CHARACTER STRING  │──704
        │ REGION AND MEDIAN OF LINE HEIGHT│
        └─────────────────────────────┘
                    │
                    ▼
               ◇ 706
       DOES SELECTED
    CHARACTER STRING REGION      NO
      FIT IN WITH PRESET  ─────────────┐
        CONDITION?                     │
                    │ YES              │
                    ▼                  │
        ┌─────────────────────────────┐│
        │ RECOGNIZE CORRESPONDENT      ││
        │  CHARACTER STRING REGION AS  │──708
        │ TELEPHONE NUMBER EXTRACTION  ││
        │       OBJECT REGION          ││
        └─────────────────────────────┘│
                    │                  │
                    ▼                  │
        ┌─────────────────────────────┐│
        │ PERFORM VERTICAL PROJECTION  ││
        │  ONTO REGION RECOGNIZED AS   │──710
        │    TELEPHONE NUMBER          ││
        │   EXTRACTION OBJECT          ││
        └─────────────────────────────┘│
                    │                  │
                    ▼                  │
        ┌─────────────────────────────┐│
        │ EXTRACT REGION INFORMATION ON││
        │CHARACTER REGIONS CONSTITUTING││
        │ TELEPHONE NUMBER EXTRACTION  │──712
        │ OBJECT REGION AND INTERVAL   ││
        │  MEDIAN OF EACH OF THE       ││
        │    CHARACTER REGIONS         ││
        └─────────────────────────────┘│
                    │                  │
                    ▼◄─────────────────┘
               ◇ 714
  ┌──────────────┐  HAVE ALL
  │SELECT ANY ONE│ CHARACTER STRING
  │OF OTHER      │◄NO REGIONS RECOGNIZED THROUGH
  │UNCHECKED     │   HORIZONTAL PROJECTION
  │CHARACTER     │──716  BEEN CHECKED?
  │STRING REGIONS│
  └──────────────┘        │ YES
                          ▼
                     ◇ 718
                  IS THERE ANY
              REGION RECOGNIZED AS    NO
               TELEPHONE NUMBER  ──────────┐
              EXTRACTION OBJECT            │
                  REGION?                  │
                     │ YES                 ▼
                     ▼                    ╭───╮
                  ╭──────╮               ( C )
                 ( RETURN )               ╰───╯
                  ╰──────╯
```

FIG.7

(a)

Horiaontal
Projection

123-456-789
ABCDEF

PROJECTION RESULT

(b)

Vertical
Projection

123-4

PROJECTION RESULT

FIG.8

EXTRACT NUMERAL REGION IN LINES RECOGNIZED AS TELEPHONE NUMBER EXTRACTION OBJECT LINES — 210

SELECT ANY ONE OF TELEPHONE NUMBER EXTRACTION OBJECT REGIONS IN ACCORDANCE WITH PRESET ORDER — 900

B

SELECT ANY ONE OF CHARACTER REGIONS IN SELECTED REGION — 902

IS NUMBER OF BLOBS CONTAINED IN SELECTED CHARACTER REGION TWO OR MORE? — 904  YES

NO

IS INTERVAL BETWEEN SELECTED CHARACTER REGION AND CHARACTER ADJACENT THERETO LESS THAN INTERVAL MEDIAN? — 906  YES

NO

IS BLOB CONTAINED IN CORRESPONDENT CHARACTER REGION SYMBOL '−'? — 908  YES

RECOGNIZE CORRESPONDENT BLOB AS SYMBOL '−' — 914

NO

IS DIFFERENCE BETWEEN HEIGHT OF CORRESPONDENT BLOB AND HEIGHT MEDIAN OF CORRESPONDENT MORE THAN PRESET SIZE? — 910  YES

NO

RECOGNIZE BLOB OF CORRESPONDENT CHARACTER REGION AS NUMERAL — 912

RECOGNIZE BLOB OF CORRESPONDENT CHARACTER REGION AS CHARACTER — 916

SELECT UNCHECKED CHARACTER REGION — 920  YES

HAVE ALL CHARACTER REGIONS OF CORRESPONDENT REGION BEEN CHECKED? — 918

NO

A

FIG.9A

(A)

↓

IS NUMBER OF
BLOBS RECOGNIZED AS
CHARACTER EXCEPT SYMBOL '–'
TWO OR MORE IN
CORRESPONDENT
REGION? —950

YES →

NO
↓

RECOGNIZE CORRESPONDENT
REGION AS NUMERAL REGION —952

↓

IS THERE ANOTHER —954
REGION RECOGNIZED AS
TELEPHONE NUMBER EXTRACTION
OBJECT LINE?

YES →

—956
SELECT ANOTHER
REGION RECOGNIZED AS
TELEPHONE NUMBER
EXTRACTION OBJECT REGION

→ (B)

NO
↓

NO ←    IS THERE ANOTHER —958
REGION RECOGNIZED AS
NUMERAL REGION?

YES
↓

(C)    RETURN

FIG.9B

(a)

(b)

(c)

2312다라2

(d)

—

FIG.10

COMBINE AND STORE RECOGNIZED
NUMERALS AS TELEPHONE
NUMBER — 214

SELECT ANY ONE OF NUMERAL REGIONS — 1100

1102
IS NUMBER OF
NUMERALS CONTAINED IN
CORRESPONDENT NUMERAL
REGION BELOW 7? — YES

NO

1104
IS NUMBER OF
INTERVALS DIVIDED DUE TO BLACK OR
SYMBOL '–' BETWEEN
2 AND 5? — NO

YES

1106
IS NUMBER OF INTERVALS
① 2    ② 4
③ 3    ④ 5
?

① 2                ③ 3                ② 4                ④ 5

1108
PRODUCE
TELEPHONE NUMBER
COMBINATION IN
ACCORDANCE
WITH 2 INTERVALS

1110
PRODUCE
TELEPHONE NUMBER
COMBINATION IN
ACCORDANCE
WITH 3 INTERVALS

1112
PRODUCE
TELEPHONE NUMBER
COMBINATION IN
ACCORDANCE
WITH 4 INTERVALS

1114
PRODUCE
TELEPHONE NUMBER
COMBINATION IN
ACCORDANCE
WITH 5 INTERVALS

1118
SELECT ANOTHER
NUMERAL REGION — YES

1116
IS THERE ANOTHER
NUMERAL REGION?

NO

RETURN

FIG.11